# EUROPÄISCHE PATENTSCHRIFT

(11) **EP 3 814 886 B1**
(45) Veröffentlichungstag und Bekanntmachung des Hinweises auf die Patenterteilung: **10.08.2022**
(21) Anmeldenummer: 19741971.6
(22) Anmeldetag: 27.06.2019
(51) Int. Cl.: G06F 7/58

(54) **VERFAHREN ZUR ERZEUGUNG VON AUF QUANTENRAUSCHEN BASIERENDEN ZUFALLSZAHLEN**
METHOD FOR PRODUCING RANDOM NUMBERS ON THE BASIS OF QUANTUM NOISE
PROCÉDÉ DE GÉNÉRATION DE NOMBRES ALÉATOIRES SE BASANT SUR DES BRUITS QUANTIQUES

(30) Priorität: 29.06.2018 DE 102018210799
(43) Veröffentlichungstag der Anmeldung: 05.05.2021
(73) Patentinhaber: Max-Planck-Gesellschaft zur Förderung der Wissenschaften e.V., 80539 München (DE); AIT Austrian Institute of Technology GmbH, 1210 Wien (AT)
(72) Erfinder: KHAN, Imran, 90429 Nürnberg (DE); LEUCHS, Gerd, 91369 Wiesenthau (DE); MARQUARDT, Christoph, 91301 Forchheim (DE); PACHER, Christoph, 1200 Wien (AT); BOXLEITNER, Winfried, 4820 Bad Ischl (AT)
(74) Vertreter: FDST Patentanwälte
(86) Internationale Anmeldenummer: PCT/EP2019/067116
(87) Internationale Veröffentlichungsnummer: WO 2020/002489

(56) Entgegenhaltungen:
- US-B1- 7 284 024
- YONG SHEN ET AL: "Practical quantum random number generator based on measuring the shot noise of vacuum states", PHYSICAL REVIEW A (ATOMIC, MOLECULAR, AND OPTICAL PHYSICS), Bd. 81, Nr. 6, 1. Juni 2010 (2010-06-01), XP055478398, USA ISSN: 1050-2947, DOI: 10.1103/PhysRevA.81.063814
- CHRISTIAN GABRIEL ET AL: "A generator for unique quantum random numbers based on vacuum states", NATURE PHOTONICS, Bd. 4, Nr. 10, 29. August 2010 (2010-08-29), Seiten 711-715, XP055211918, ISSN: 1749-4885, DOI: 10.1038/nphoton.2010.197

## Beschreibung

Die Erfindung betrifft ein Verfahren zur Erzeugung von auf Quantenrauschen basierenden Zufallszahlen, wobei anhand einer wiederholten Messung eines quantenmechanischen Zufallsprozesses eine erste Zahlensequenz generiert wird, wobei anhand der ersten Zahlensequenz eine Zufallszahl erzeugt wird, wobei die Messung des quantenmechanischen Zufallsprozesses durch eine Messvorrichtung zur abgeglichenen Homodyndetektion eines optischen Eingangssignals mittels eines durch einen Laser erzeugten Laserstrahls als lokalem Oszillator durchgeführt wird, die Erfindung betrifft weiter einen entsprechenden Zufallszahlengenerator.

In technischen Anwendungen, in welchen eine Vorhersagbarkeit eines Prozesses vermieden werden soll, werden oftmals Zufallszahlen eingesetzt. Dies kann beispielsweise bei numerischen Simulationen von komplexen Funktionen wie Lösungen von partiellen Differentialgleichungen der Fall sein, wobei ein "Scan" eines Definitionsgebietes der Funktion an möglichst zufällig ausgewählten Stützstellen durchgeführt wird, um eine vorab nicht erkennbare Periodizität der Stützstellen bzgl. ihrer Funktionswerte zu vermeiden.

Zufallszahlen werden insbesondere auch in der Kryptographie zur Erzeugung sicherer Schlüssel verwendet. Je zufälliger dabei eine Sequenz einzelner Zeichen eines Schlüssels ausgewählt wird, je höher also eine Entropie dieser Sequenz ist, umso schwieriger ist es generell, anhand einzelner bekannter Bruchstücke des Schlüssels einen unbekannten Teil des Schlüssels vorherzusagen.

Bei der Erzeugung von Zufallszahlen lassen sich allgemein drei verschiedene Modelle unterscheiden: Zunächst kann eine Teilsequenz einer a priori deterministisch vorgegebenen Liste von möglichst unkorrelierten Zahlen verwendet werden. Dies ist insbesondere in mobilen Anwendungen vorteilhaft, da hierfür nur die Liste von Zahlen als Datei hinterlegt werden muss. Bei einer Kenntnis dieser Liste, und dem zu wählenden Startwert liegt jedoch infolge der deterministischen Vorgabe keine Zufälligkeit mehr vor, was insbesondere für sicherheitskritische Anwendungen problematisch sein kann. Dies kann dadurch behoben werden, dass man stattdessen einen physikalischen Zufallsprozess bei der Erzeugung der Zufallszahlen verwendet, dessen Messergebnis nicht vorhersehbar ist. Anhand der Messergebnisse können dann z.B. mittels Zufallsextraktion oder allgemein Extraktion der Entropie die Zufallszahlen erzeugt werden.

Hierbei ist jedoch zu unterscheiden zwischen physikalischen Prozessen, deren Ergebnisse nur chaotisch von minimalen Veränderungen der Randbedingungen abhängen und deshalb vollständig zufällig wirken, jedoch physikalisch betrachtet eine deterministische Zeitentwicklung aufweisen, und bei einer Kenntnis dieser Randbedingungen theoretisch vorhersagbar wären, und solchen Prozessen, welche intrinsisch probabilistisch sind. Insbesondere die Messung quantenmechanischer Observablen, also physikalischer Größen im Gültigkeitsbereich quantenmechanischer Unschärferelationen, stellt einen derartigen intrinsisch probabilistischen Prozess dar, für welchen selbst bei der vollständigen exakten Kenntnis aller Bedingungen eine Vorhersage des Ergebnisses einer konkreten Messung nicht möglich ist, sondern lediglich über die Verteilung einer Vielzahl von Messergebnissen Aussagen getroffen werden können, welche für die Erzeugung von Zufallszahlen zusätzlich herangezogen werden können.

Bei der Erzeugung von Zufallszahlen anhand physikalischer Prozesse sind jedoch oftmals infolge der technischen Anforderungen zur Erzeugung und Messung des betreffenden Prozesses Abmessungen für einen entsprechenden Zufallszahlengenerator impliziert, welche für viele Anwendungen unpraktisch sind.

In Christian Gabriel et al.: "A generator for unique quantum random numbers based on vacuum states", Nature Photonics, Bd. 4, Nr. 10, 2010, Seiten 711 bis 715, wird ein Zufallszahlengenerator vorgeschlagen, welcher eine abgeglichene Homodynmessung des quantenoptischen Vakuumzustands mittels eines Lasers als lokalem Oszillator durchführt. Hierbei entspricht das Messresultat einer Einzelmessung von einem Quadraturwert für den Vakuumzustand im optischen Phasenraum. Infolge der quantenmechanischen Fluktuationen, dem sog. Quantenrauschen, werden dabei auch für den Vakuumzustand von Null verschiedene, in zufälliger Weise variierende Werte der Quadratur gemessen, welche durch entsprechende Einteilung des Messbereiches nach einer Eliminierung der elektronischen Rauschanteile als Zufallszahlen verwendet werden können.

Der in der genannten Publikation vorgeschlagene Messaufbau hat den Vorteil, intrinsisch zufällige Ergebnisse bei guter Skalierbarkeit zu erzeugen, ist jedoch insbesondere für sicherheitskritische Anwendungen insbesondere in der Kryptographie nicht ausreichend gegen externe Manipulationen zur Beeinflussung des physikalischen Systems und damit zur Reduktion der Entropie der ausgegebenen Zufallszahlen gesichert.

Ähnliche Quantenzufallszahlengeneratoren sind auch in Yong Shen et al.: "Practical quantum random number generator based on measuring the shot noise of vacuum states", Physical Review A, Bd. 81, Nr. 6, 063814 (2010), sowie in der US 7,284,024 US genannt. Auch dort wird jeweils eine abgeglichene Homodynmessung des quantenoptischen Vakuumzustands mittels eines Lasers als lokalem Oszillator durchführt. Infolge eines hohen "klassischen" Rauschens der in Physical Review A, Bd. 81, Nr. 6, 063814 verwendeten Messeinrichtung wird jedoch dort auf das gemessene Signal zusätzlich ein weiteres Signal aufmoduliert, um effektiv für die Erzeugung der Zufallszahlen ein Seitenband einer Tiefpass-gefilterten Trägerfrequenz des lokalen Oszillators zu verwenden. Für höchst sicherheitskritische Anwendungen wären jedoch diese elektronischen Modulationsvorgänge, welche nachträglich auf das Messsignal angewandt werden, im Ernstfall nicht ausreichend gegen die bereits angesprochenen externen Manipulationen geschützt.

Der Erfindung liegt daher die Aufgabe zugrunde, ein Verfahren zur Erzeugung von auf Quantenrauschen basierenden Zufallszahlen anzugeben, welches besonders günstig skalierbar durchzuführen ist und dabei einen möglichst guten Schutz gegen externe Manipulationen des physikalischen Systems oder allgemein gegen externe physikalische Einflüsse jeglicher Art, welches das Quantenrauschen erzeugt, bieten soll. Weiter liegt der Erfindung die Aufgabe zugrunde, einen entsprechenden Zufallszahlengenerator anzugeben.

Die erstgenannte Aufgabe wird erfindungsgemäß gelöst durch ein Verfahren zur Erzeugung von auf Quantenrauschen basierenden Zufallszahlen, wobei anhand einer wiederholten Messung eines quantenmechanischen Zufallsprozesses eine erste Zahlensequenz generiert wird, wobei anhand der ersten Zahlensequenz eine Zufallszahl erzeugt wird, und wobei die Messung des quantenmechanischen Zufallsprozesses durch eine Messvorrichtung zur abgeglichenen Homodyndetektion eines optischen Eingangssignals mittels eines durch einen Laser erzeugten Laserstrahls als lokalem Oszillator durchgeführt wird. Hierbei ist vorgesehen, dass zur Überprüfung und insbesondere Berechnung der Entropie der ersten Zahlensequenz mittels einer wenigstens in einer unmittelbaren Umgebung des Laser und/oder der Messvorrichtung angeordneten Antennenvorrichtung eine auf den Laser und/oder die Messvorrichtung eingestrahlte Strahlungsleistung ermittelt wird, und/oder mittels einer zu zufälligen Zeitpunkten ein Anteil an Quantenrauschen in einem Ausgangssignal der Messvorrichtung bestimmt und/oder insbesondere abgeschätzt wird. Vorteilhafte und teils für sich gesehen erfinderische Ausgestaltungen des Verfahrens sind Gegenstand der entsprechenden Unteransprüche.

Unter einer abgeglichenen Homodyndetektion eines optischen Eingangssignals ist vorliegend insbesondere eine Messung zu verstehen, bei welcher das optische Eingangssignal zunächst an einem zentralen Strahlteiler mit einem lokalem Oszillator überlagert wird, der hier durch den Laserstrahl oder einen vom Laserstrahl abgezweigten Hilfsstrahl gegeben ist. Der zentrale Strahlteiler weist dabei eine symmetrische Aufteilung eines an einem seiner Eingänge eingehenden optischen Signals auf seine beiden Ausgänge auf. Anschließend werden an den beiden Ausgängen des Strahlteilers die Intensitäten der aus der Überlagerung von optischem Eingangssignal und lokalem Oszillator gebildeten Ausgangssignale jeweils mittels Detektoren gemessen, wobei die von den Detektoren generierten internen Messsignale eine Proportionalität zur Intensität aufweisen. Dies kann beispielsweise mittels Photodioden erfolgen, wobei die in den Photodioden erzeugten Photoströme die gewünschte Proportionalität aufweisen.

Anschließend werden die beiden internen Messsignale, also z.B. die Photoströme, ggf. nach einer Vorverstärkung, z.B. jeweils mittels eines Transimpedanz-Verstärkers, voneinander subtrahiert. Das hierdurch generierte Signal kann als ein Ausgangssignal der Messvorrichtung der abgeglichenen Homodyndetektion verwendet werden. Es kann nachgewiesen werden, dass das Ausgangssignal der Messvorrichtung im Wesentlichen eine Quadratur des aus Amplitude und optischer Phase gebildeten Phasenraumes für das elektromagnetische Feld des optischen Eingangssignals wiedergibt, wobei die Phasenorientierung der Quadratur von der Phasenreferenz des lokalen Oszillators in der entsprechenden Frequenzmode abhängt.

Als optisches Eingangssignal kann insbesondere ein Vakuumzustand gewählt werden. Dies bedeutet, dass ein Eingang des zentralen Strahlteilers oder ein mit einem Eingang verbundener optischer Wellenleiter derart blockiert wird, dass dort keine Photonen von außen eindringen können. Infolge der quantenmechanischen Unschärferelationen ist die gemessene Amplitudenquadratur des Vakuums nicht exakt Null, sondern Fluktuationen unterworfen, welche einer Gaußverteilung folgen, jedoch für eine konkrete Messung absolut unvorhersehbar sind. Das optische Eingangssignal kann jedoch auch durch ein vom Vakuumzustand verschiedenes Signal gebildet werden, vorzugsweise einen im Rahmen der Messgenaugkeit reinen Quantenzustand mit einer nicht-verschwindenden mittleren Photonenzahl <n>, welche insbesondere weit weniger als ein Photon, bevorzugt weniger als 0.1 Photon, besonders bevorzugt weniger als 0.01 pro Puls und/oder pro Messzeiteinheit beträgt.

Insbesondere wird als optisches Eingangssignal ein derartiges Signal verwendet, welches hinsichtlich der abgeglichenen Homodyndetektion möglichst Quantenrausch-limitiert ist. Dies bedeutet, dass ausgehend von einem theoretischen Idealfall ohne technisches Rauschen im Laser oder in der Messvorrichtung das optische Eingangssignal dergestalt ist, dass sämtliche statistischen Schwankungen im Ausgangssignal der Messvorrichtung lediglich durch quantenmechanische Unschärferelationen bedingt sind. In der Realität liegt dabei eine Abweichung von diesem Idealfall vor, welche einerseits durch technisches Rauschen, insbesondere im Laser und in der Messvorrichtung, andererseits durch insbesondere temperaturbedingte Überlagerungen eines derartigen Quantenrausch-limitierten Signals mit anderen Signalkomponenten bedingt ist. Für die Erzeugung der Zufallszahlen ist jedoch derjenige Anteil an Rauschen im Ausgangssignal von Belang, welcher sich auf besagte quantenmechanischen Unschärferelationen, welche für das optische Eingangssignal gelten, zurückführen lässt, weswegen diesem gegenüber der technischen Rauschanteil möglichst zu unterdrücken und insbesondere zu quantifizieren ist, um den rein technischen Rauschanteil bei der Erzeugung der Zufallszahlen mittels des entsprechenden Algorithmus aus dem Ausgangssignal der Messvorrichtung entsprechend berücksichtigen zu können.

Durch eine Überlagerung des lokalen Oszillators mit dem optischen Eingangssignal am zentralen Strahlteiler und eine anschließende Subtraktion der Intensitäten gehen in das Ausgangssignal der Messvorrichtung im Idealfall - also insbesondere bei einem ideal symmetrischen zentralen Strahlteiler und absolut identischen Detektoren - keinerlei Beiträge der Amplitudenfluktuationen des lokalen Oszillators bei der Messfrequenz ein, wodurch lediglich die Amplitude des optischen Eingangssignals und ihre Fluktuationen mit der Phasenrereferenz des lokalen Oszillators gemessen wird.

Die Messung von im Idealfall Quantenrausch-limitierten optischen Eingangssignalen mittels abgeglichener Homodyndetektion ist z.B. beschrieben in Ulf Leonhard, "Measuring the Quantum State of Light", Cambridge Studies in Modern Optics, Bd. 22, Cambridge University Press, 1997, insbesondere Kap. 2-4, oder Hermannn A. Haus, "Electromagnetic Noise and Quantum Optical Measurments", Springer, 2000, insbesondere Kap. 8.

Unter einer wiederholten Messung zur Erzeugung der ersten Zahlensequenz ist hierbei insbesondere zu verstehen, dass das Ausgangssignal der Messvorrichtung zu verschiedenen Zeitpunkten ausgewertet wird, und hieraus die erste Zahlensequenz erzeugt wird. Für die Erzeugung der ersten Zahlensequenz aus dem Ausgangssignal der Messvorrichtung kann auf dieses insbesondere eine zusätzliche diskrete Einteilung des Wertebereiches des Ausgangssignals in einzelne sog. "Bins" angewandt werden, welche bevorzugt wesentlich gröber ist als das Auflösungsvermögen der Messvorrichtung. Bevorzugt wird diese Einteilung hierbei derart gewählt, dass angesichts der theoretischen Verteilung der Amplitudenquadratur des optischen Eingangssignals und somit der Statistik der zu erwartenden Messergebnisse die Wahrscheinlichkeit, dass ein kommendes Messresultat einem bestimmten Bin zuzuordnen ist, für alle Bins gleich ist. Dies entspricht einer Aufteilung der von der Verteilungsfunktion begrenzten Fläche in flächengleiche Abschnitte, deren Abszissengrenzen genau die Bins festlegen.

Die Zufallszahl kann nun anhand der ersten Zahlensequenz durch eine weitere, insbesondere informationstheoretische Verarbeitung, z.B. mittels Algorithmen zur Zufallsextraktion wie z.B. Hashfunktionen, erfolgen. Insbesondere kann im Rahmen der Erfindung die erste Zahlensequenz auch direkt als Zufallszahl verwendet werden.

Um nun einen möglichst geringen Grad an Vorhersagbarkeit der Zufallszahlen sicherzustellen, können Zufallszahlen verschiedenen Tests unterworfen werden. Statistische Tests zielen hierbei auf die Verteilung der einzelnen Zufallszahlen sowie ihre Unabhängigkeit, wobei für die Berechnung bevorzugt eine hinreichend große Menge an erzeugten Zufallszahlen vorliegen sollte, damit die Aussagen eines statistischen Tests als hinreichend aussagekräftig angesehen werden können. Es liegt jedoch in der Natur der Sache, dass Zufall sich nicht exakt nachweisen lässt, sondern lediglich Maße für Korrelation zwischen einzelnen Zufallszahlen ermittelbar sind. Eine zu geringe Zufälligkeit ist bei einer Erzeugung einer kürzeren Folge von Zufallszahlen hierdurch jedoch ebenso schwer zu erkennen wie Verteilungsmuster, welche erheblich über den Horizont der für einen statistischen Test erzeugten Zufallszahlen hinausgehen.

Demgegenüber wird erfindungsgemäß vorgeschlagen, den Grad an Zufälligkeit der ersten Zahlensequenz, mit anderen Worten also ihre enthaltene Entropie, nicht über statistische Tests zu überprüfen, sondern die intrinsische Zufälligkeit des zugrunde liegenden physikalischen Prozesses auszunutzen, und eine von äußeren Störungen unbeeinflusste Messung des physikalischen Prozesses anhand überprüfbarer physikalischer Größen sicherzustellen. Es wird also überprüft, ob die Annahmen für das der Erzeugung der Zufallszahlen zugrunde liegende physikalische Modell korrekt sind, bzw. in welchem quantitativen Ausmaß Abweichungen davon vorliegen, und ob diese als tolerierbar erachtet werden. Hierfür wird einerseits mittels einer wenigstens in einer unmittelbaren Umgebung des Laser und/oder der Messvorrichtung angeordneten Antennenvorrichtung eine auf den Laser und/oder die Messvorrichtung eingestrahlte insbesondere elektromagnetische Strahlungsleistung ermittelt, und andererseits zu zufällig gewählten Zeitpunkten ein Anteil an Quantenrauschen in einem Ausgangssignal der Messvorrichtung bestimmt. Die Zeitpunkte, zu welchen ein Anteil an Quantenrauschen zu bestimmen ist, können insbesondere anhand von im Zufallszahlengenerator selbst erzeugten und als "hinreichend hochwertigen", also insbesondere unabhängigen Zufallszahlen ermittelt werden.

Unter einer wenigstens in einer unmittelbaren Umgebung des Laser und/oder der Messvorrichtung angeordneten Antennenvorrichtung ist hierbei insbesondere eine flächenmäßige Ausgestaltung der Antennenvorrichtung derart zu verstehen, dass wenigstens aus einer Raumrichtung auf den Laser und/oder die Messvorrichtung auftreffende Strahlung detektiert werden kann, beispielsweise über entsprechende Leiterschleifen, welche den Laser und/oder der Messvorrichtung wenigstens teilweise umgeben, oder an diesen in einem bzgl. einer zu erwartenden Strahlaufweitung der potentiell eingestrahlten Strahlungsleistung vernachlässigbaren Abstand vorbeigeführt werden.

Bevorzugt ist die Ausgestaltung derart, dass zumindest Strahlung aus denjenigen Raumrichtungen detektiert werden kann, gegen welche die Messvorrichtung und der Laser den geringsten anderweitigen Schutz durch Leiter- oder Trägerplatten aufweisen. Im Rahmen der Antennenvorrichtung kann hierbei einerseits eine eigens zum Zweck der Strahlungsdetektion vorgesehene Antenne verwendet werden, oder andererseits eine Anzahl an Leiterschleifen in entsprechender Form um den Laser und/oder die Messvorrichtung herum angeordnet werden, wobei die Leiterschleifen auch noch weitere Funktionen einnehmen können. Eine eingestrahlte Strahlungsleistung kann dann z.B. mittels einer entsprechenden Filterung der durch die Leiterschleifen übertragenen Signale ermittelt werden. Insbesondere kann die Antennenvorrichtung eine oder mehrere, bevorzugt zueinander orthogonale Dipol-Antennen umfassen, deren Strahlungsleistung jeweils einzeln oder in Summe erfasst werden kann.

Übersteigt die eingestrahlte Strahlungsleistung einen kritischen Wert, kann darauf geschlossen werden, dass der Laser und/oder die Messvorrichtung ggf. nicht mehr störungsfrei arbeiten können, und somit das Ausgangssignal der Messvorrichtung nicht mehr den vermeintlich zugrunde liegenden quantenmechanischen Zufallsprozess wiedergibt. In diesem Fall kann die Erzeugung von Zufallszahlen vorübergehend ausgesetzt werden. Insbesondere kann auch die Erfassung der eingestrahlten Strahlungsleistung zu zufällig gewählten Zeitpunkten erfolgen. Liegt für alle Zeitpunkte die Strahlungsleistung unterhalb des kritischen Wertes, kann infolge der Zufälligkeit und einer entsprechenden statistischen Unabhängigkeit der Zeitpunkte mit einer von der Anzahl und der Verteilung der Zeitpunkte abhängenden Sicherheit darauf geschlossen werden, dass auch für andere Zeitpunkte die Strahlungsleistung den kritischen Wert nicht übersteigt.

Unter einem Bestimmen eines Anteils an Quantenrauschen in einem Ausgangssignal der Messvorrichtung zu zufällig gewählten Zeitpunkten ist hierbei zu verstehen, dass die entsprechenden Maßnahmen zur Bestimmung des Anteils an Quantenrauschen zu zufällig gewählten Zeitpunkten während der Erzeugung von Zufallszahlen, insbesondere zu zufällig gewählten Zeitpunkten während des Betriebs der Messvorrichtung durchgeführt werden. Die Auswahl der zufällig gewählten Zeitpunkte kann dabei insbesondere anhand von einer Anzahl von mittels desselben Verfahrens vorab erzeugter Zufallszahlen erfolgen, wobei als Startwerte des Verfahrens für eine erstmalige Durchführung eine Anzahl an generierten Zufallszahlen als sog. "seed" hinterlegt werden kann. Der Anteil an Quantenrauschen im Ausgangssignal kann insbesondere mittels passiver optischer Elemente und/oder elektro-optischer Elemente, welche jeweils auf den Laserstrahl und/oder auf das optische Eingangssignal wirken, und/oder mittels einer gesonderten Auswertung der internen Messsignale der Detektoren in der Messvorrichtung erfolgen.

Durch ein Bestimmen des Anteils an Quantenrauschen im Ausgangssignal kann nun sichergestellt werden, dass die im Gesamtrauschanteil des Ausgangssignals enthaltenen Rauschanteile, welche nicht quantenmechanischer Natur sind, also z.B. elektronisches Rauschen des Lasers oder der Detektoren, das zu messende Quantenrauschen nicht dominieren. Insbesondere können hierbei gezielte Manipulationen über die nicht quantenmechanischen Rauschanteile, z.B. mittels schwer zu detektierender deterministischer Rauschmuster im Laser, im Zweifelsfall erkannt werden.

Bevorzugt wird die Zufallszahl anhand der ersten Zahlensequenz mittels eines vorgegebenen Algorithmus zur Zufallsextraktion erzeugt, wobei anhand des ermittelten Anteils an Quantenrauschen der Algorithmus zur Zufallsextraktion derart gesteuert wird, dass die Entropie pro Zahleneinheit der ersten Zahlensequenz, die der Algorithmus extrahiert, um so geringer ist, und insofern die extrahierte Zufallszahl umso kürzer ist, je geringer der Anteil an Quantenrauschen ist. Unter einem Algorithmus zur Zufallsextraktion ist hierbei generell jedes mathematische Verfahren zu verstehen, welches aus einer Eingabesequenz einer Länge n mit einer Entropie Sn eine Ausgabesequenz der Länge m mit einer Entropie Sm derart erzeugt, dass die Entropie pro Zahleneinheit Sm/m der Ausgabesequenz höher ist als die Entropie pro Zahleneinheit Sn/n der Eingabesequenz, also Sm/m > Sn/n erreicht wird. Als Entropie pro Zahleneinheit ist hierbei insbesondere eine Entropie pro Bit oder pro Byte, und allgemein eine Entropie pro möglichem Ziffernwert der Zufallszahl umfasst, wobei die Zufallszahl durch eine Aneinanderreihung der verschiedenen Ziffern darstellbar ist.

Als konkretes Maß für die Entropie kann hierbei insbesondere die Shannon-Entropie, die Hartley-Entropie (Maximums-Entropie), die Minimums-Entropie, eine Renyi-Entropie, oder eine andere der geläufigen Definitionen für Entropie wie z.B. auch eine bedingte Entropie verwendet werden, solange die Definition konsistent angewandt wird. Insbesondere die Minimums-Entropie wird in vielen Sicherheitsbeweisen kryptographischer Anwendungen oft verwendet, da sie oftmals die restriktivsten Voraussetzungen an das den Sicherheitsbeweis betreffende Protokoll oder System stellt. Bedingte Entropien werden in kryptographischen Sicherheitsbeweisen häufig dann verwendet, wenn Annahmen über einen Angreifer einer potentiellen Sicherheitslücke und einen durch diese möglichen Informationsfluss zum Angreifer getroffen werden sollen.

Der Algorithmus zur Zufallsextraktion kann hierbei insbesondere durch eine direkte Abbildungsvorschrift im Sinne einer Hashfunktion oder auch durch eine adaptive oder iterative oder rekursive Abbildungsvorschrift gegeben sein, beispielsweise durch einen Trevison-Extraktor, eine Toeplitz-Hashfunktion, oder allgemein eine 2-unvierselle Hashfunktion. Bevorzugt weist der Algorithmus einen Freiheitsgrad in Form eines Parameters oder einer Variablen auf, über welche die extrahierte Entropie pro Zahleneinheit bei der Erzeugung der Zufallszahl aus der ersten Zahlensequenz steuerbar ist. Dieser Parameter bzw. diese Variable kann dann in Abhängigkeit des ermittelten Anteils an Quantenrauschen im Ausgangssignal der Messvorrichtung eingestellt werden.

Die erste Zahlensequenz wird aus dem Ausgangssignal der ersten Messvorrichtung gewonnen. Dieses weist einen gewissen Rauschanteil auf, welcher definiert werden kann als eine Streuung oder Varianz um einen Mittelwert. Die Entropie der ersten Zahlensequenz hängt dabei also von der im Ausgangssignal und insbesondere in seinem Rauschanteil enthaltenen Entropie ab. Dieser Rauschanteil umfasst einerseits das intrinsische Quantenrauschen infolge der quantenmechanischen Fluktuation, andererseits auch technisches wie z.B. elektronisches Rauschen der bei der abgeglichenen Homodyndetektion verwendeten Detektoren zur Erzeugung der internen Messsignale oder elektronisches Rauschen des Lasers, aber auch Rauschen infolge von mechanischen Schwingungen der Messvorrichtung, welche u.a. temperaturbedingt sein können, und einer hieraus resultierenden nichtidealen Aufteilung des optischen Eingangssignals und des Laserstrahls.

Dieses technische Rauschen kann hypothetisch zumindest teilweise durch externe Einflüsse und/oder Einwirkungen bedingt sein, beispielsweise durch bewusste Anregung der genannten mechanischen Schwingungen, durch elektromagnetische Bestrahlung der Messvorrichtung und/oder des Lasers zur Beeinflussung oder auch durch anderweitige Manipulationen der optischen Strahlengänge. Gerade für eine Anwendung von mittels des Verfahrens erzeugten Zufallszahlen in erheblich sicherheitskritischem Kontext - beispielsweise für sog. informationstheoretisch sichere Kryptografie ("unconditionally secure cryptography") - ist bevorzugt jedweder Rauschanteil, welcher sich nicht zweifelsfrei auf die zu detektierenden Quantenfluktuationen zurückführen lässt, als potentiell kompromittierend für die gewünschte Sicherheitsstufe zu behandeln.

Die Erzeugung der Zufallszahl mittels eines Algorithmus zur Zufallsextraktion, dessen extrahierte Entropie pro Zahleneinheit von einem ermittelten Anteil an Quantenrauschen im Ausgangssignal der Messvorrichtung abhängt, ermöglicht es nun, die Rauschanteile, welche nicht quantenmechanischen Ursprungs und somit potentiell problematisch sind, zu quantifizieren, und den Algorithmus auf diese Anteile reagieren zu lassen, indem eine geringere Menge an Entropie aus der ersten Zahlensequenz extrahiert wird, wenn deren intrinsische Entropie pro Zahleneinheit infolge eines geringeren quantenmechanischen und somit höheren technischen Rauschanteils potentiell geringer ist. Die Bestimmung des Anteils an Quantenrauschen zu zufällig gewählten Zeitpunkten für die Steuerung des Algorithmus erhöht hierbei die Sicherheit zusätzlich.

Vorteilhafterweise wird zur Bestimmung des Anteils an Quantenrauschens dem Laserstrahl zu zufällig gewählten Zeitpunkten ein vorgegebenes Testsignal aufmoduliert, wobei ein Anteil des Testsignals im Ausgangssignal der Messvorrichtung ermittelt wird und der Anteil an Quantenrauschen anhand des Anteils des Testsignals bestimmt wird. Insbesondere erfolgt das Aufmodulieren des Testsignals auf den Laserstrahl mittels eines elektro-optischen oder eines akusto-optischen Modulators. Das Testsignal kann hierbei beispielsweise durch eine monofrequente sinusförmige Modulation der Amplitude des Laserstrahls gegeben sein. Auch komplexere Testsignale sind jedoch denkbar.

Das auf den Laserstrahl aufmodulierte Testsignal wird nun am zentralen Strahlteiler der Messvorrichtung aufgeteilt und von beiden Detektoren detektiert, sodass die internen Messsignale jeweils das Testsignal beinhalten. Durch die Subtraktion der internen Messsignale voneinander verschwindet bei einer perfekten Messvorrichtung, also insbesondere bei einem absolut symmetrischen zentralen Strahlteiler und absolut identischen Detektoren, der Anteil des Testsignals im Ausgangssignal vollständig. Dieser Idealfall ist jedoch in der Realität nicht zu erreichen.

Jedoch können anhand des Anteils am Testsignal im Ausgangssignal einerseits Parameter der Messvorrichtung wie z.B. das Teilungsverhältnis des zentralen Strahlteilers oder die Empfindlichkeiten der Detektoren über eine Spannungskontrolle derart angepasst werden, dass die Unterdrückung des Testsignals im Ausgangssignal maximal ist. Andererseits kann ein verbleibender Anteil des Testsignals im Ausgangssignal für die Bestimmung eines Anteils an Quantenrauschen im Ausgangssignal, insbesondere zur Steuerung einer aus der ersten Zahlensequenz mittels eines Algorithmus zur Zufallsextraktion extrahierten Entropie, herangezogen werden.

Durch ein Ermitteln des Anteils des Testsignals im Ausgangssignal lässt sich so insbesondere der Anteil an technischem Rauschen des Lasers bestimmen, welcher in das Ausgangssignal mit eingeht, und der nicht mehr unterdrückbare Anteil des technischen Rauschens als eine potentielle Verringerung der intrinsischen Entropie der ersten Zahlensequenz berücksichtigen. Weiter lässt sich über den Anteil des Testsignals im Ausgangssignal ein Teilungsverhältnis des zentralen Strahlteilers der Messvorrichtung einstellen. Hierfür wird das Testsignal dem Laserstrahl aufmoduliert, und das Teilungsverhältnis über eine geeignete Maßnahme eingestellt, z.B. interferometrisch oder über eine leichte Winkeldrehung, indem der entsprechend eingestellte Parameter ein Minimum an Anteil des Testsignals im Ausgangssignal bewirkt. Dieses Minimum des Anteils des Testsignals kann dann mit dem vor dem Einstellvorgang erhaltenen Anteil verglichen werden, was eine quantitative Aussage über die Unterdrückung klassischen Rauschens im System zulässt.

Als vorteilhaft erweist es sich hierbei, wenn anhand des Anteils des Testsignals im Ausgangssignal der Messvorrichtung ein Grad einer Asymmetrie eines zentralen Strahlteilers der Messvorrichtung bestimmt wird, wobei der Laserstrahl und das optische Eingangssignal durch ein Mach-Zehnder-Interferometer geführt werden, und dabei die Asymmetrie des zentralen Strahlteilers der Messvorrichtung über eine wenigstens eine Phasenverzögerung des Mach-Zehnder-Interferometers verringert wird.

In einem Mach-Zehnder-Interferometer wird ein eingehender Lichtstrahl zunächst anhand eines ersten Strahlteilers in zwei Teilstrahlen aufgeteilt. Wenigstens einer der beiden Teilstrahlen wird dann einer Phasenverschiebung unterzogen, z.B. mittels einer einstellbaren Laufzeitverzögerung oder eines entsprechenden Phasenmodulators, welcher z.B. einen InP- oder einen LiNb-Kristall umfasst, und beide Teilstrahlen werden an einem zweiten Strahlteiler erneut überlagert. Die Intensität der an den Ausgängen des zweiten Strahlteilers ausgegebenen Signale ist proportional zum Sinusquadrat bzw. Cosinusquadrat der halben Phasenverschiebung.

Vorliegend wird nun der Laserstrahl durch einen ersten Strahlteiler aufgeteilt, wobei der zweite Strahlteiler bevorzugt gegeben ist durch den zentralen Strahlteiler der Messvorrichtung. Falls als optisches Eingangssignal ein anderes Signal als der Vakuumzustand verwendet wird, ist dieses entsprechend vor dem zentralen Strahlteiler oder vor dem ersten Strahlteiler des Mach-Zehnder-Interferometers mit dem entsprechenden Anteil des Laserstrahls im Strahlengang zu überlagern, ggf. auch über einen weiteren Strahlteiler. Infolge der erwähnten Abhängigkeit der an den beiden Ausgängen des zentralen Strahlteilers jeweils zu den Detektoren ausgegebenen Signale von der Phasenverschiebung lässt sich über diese eine Asymmetrie des zentralen Strahlteilers korrigieren.

Die Verwendung eines Mach-Zehnder-Interferometers zur Korrektur einer Asymmetrie des zentralen Strahlteilers der Messvorrichtung bietet dabei insbesondere hinsichtlich der Skalierbarkeit der Abmessungen erhebliche Vorteile: Während bei einer Freistrahl-Implementierung, in welcher der Laserstrahl durch den freien Raum propagiert, zu messende optische Moden beispielsweise auch in unterschiedlichen Polarisationsrichtungen kodiert sein können, und somit der zentrale Strahlteiler als polarisationssensitiver Strahlteiler gewählt werden kann, welcher zusätzlich noch über Viertel- und/oder Halbwellenplatten im Strahlengang feinabgestimmt werden kann, ist eine derartige Umsetzung infolge der verwendeten Komponenten derzeit nicht miniaturisierbar. Der Einsatz eines Mach-Zehnder-Interferometers erlaubt es, das Teilungsverhältnis des zentralen Strahlteilers auch bei einer vollständigen Implementierung des optischen Signalweges auf einem integrierten photonischen Schaltkreis zu kontrollieren, wodurch eine entsprechende Skalierung hier überhaupt erst ermöglicht wird.

Günstigerweise wird zur Bestimmung des Anteils an Quantenrauschen zu zufällig gewählten Zeitpunkten eine Intensität des Laserstrahls und/oder des optischen Eingangssignals abgeschwächt, wobei eine Abhängigkeit eines Rauschens im Ausgangssignal der Messvorrichtung vom Grad einer aus der Abschwächung resultierenden Intensität überprüft wird. Die Abschwächung der Intensität des Laserstrahls und/oder des optischen Eingangssignals kann dabei insbesondere mittels wenigstens eines linearen Abschwächers erfolgen. Bevorzugt wird hierbei die Intensität des Laserstrahls über ein zufällig ausgewähltes Zeitintervall hinweg gemäß einem vorgegebenen Abschwächungsmuster, z.B. linear, kontinuierlich abgeschwächt, und dabei ein Rauschen im Ausgangssignal der Messvorrichtung überprüft. Als Maß für ein Rauschen bzw. Quantenrauschen kann hierbei insbesondere eine Varianz des Ausgangssignals bei der Überprüfung herangezogen werden.

Das Quantenrauschen eines idealen Laserstrahls skaliert bei hohen Photonenzahlen linear in der Intensität, weswegen das überprüfte Rauschen im Ausgangssignal idealerweise das vorgegebene Abschwächungsmuster reproduzieren sollte, also z.B. bei einer in der Zeit linearen Abschwächung der Intensität des Laserstrahls ebenfalls eine zeitlich lineare Verringerung des Rauschens zufolge haben sollte. Thermisches Rauschen des Lasers im Laserstrahl skaliert jedoch quadratisch in der Intensität, weswegen eine Abweichung des Rauschens im Ausgangssignal vom vorgegebenen Abschwächungsmuster, also im genannten Beispiel vom zeitlinearen Verlauf, einen Hinweis darauf gibt, dass der Laser zusätzlich zu seinen Quantenfluktuationen anderes Rauschen nicht quantenmechanischer Natur zur abgeglichenen Homodynmessung beiträgt, welches potentiell extern beeinflusst sein könnte. Anhand des Grades der Abweichung vom vorgegebenen Abschwächungsmuster kann dann ein Anteil an Quantenrauschen im Ausgangssignal bestimmt und/oder abgeschätzt werden.

Bevorzugt wird auch das optische Eingangssignal über ein zufällig ausgewähltes Zeitintervall hinweg gemäß einem vorgegebenen Abschwächungsmuster abgeschwächt. Für den Fall, dass das optische Eingangssignal gegeben ist durch den Vakuumzustand, sollte sich im Ausgangssignal keinerlei Veränderung während der Abschwächung ergeben. Eine Veränderung im Ausgangssignal lässt also darauf schließen, dass unerwünschtes Streulicht in den Eingang der Messvorrichtung eindringt, welcher zu Sicherung einer Messung des Vakuumzustands eigentlich vollständig "blockiert" sein sollte. Anhand der Veränderungen im Ausgangssignal kann jedoch ein Anteil an Streulicht bestimmt werden, und hierdurch der Anteil an eigentlichem Quantenrauschen im Ausgangssignal abgeschätzt werden. Die Kenntnis des Anteils an Quantenrauschen infolge eines nicht-idealen Lasers und/oder infolge von Streulicht kann insbesondere zur Steuerung einer extrahierten Entropie pro Zahleneinheit eines Algorithmus zur Zufallsextraktion bei der Erzeugung einer Zufallszahl aus der ersten Zahlensequenz herangezogen werden.

In einer weiter vorteilhaften Ausgestaltung wird zur Bestimmung des Anteils an Quantenrauschen eine Linearkombination von internen Messsignalen der Messvorrichtung zur abgeglichenen Homodyndetektion zu zufällig gewählten Zeitpunkten variiert, und hieraus ein Anteil an technischem Rauschen im Ausgangssignal abgeschätzt. Als interne Messsignale der Messvorrichtung zur abgeglichenen Homodyndetektion sind hierbei insbesondere diejenigen Messsignale der Detektoren umfasst, welche im Wesentlichen jeweils die Intensität der an den Ausgängen des zentralen Strahlteilers ausgegebenen optischen Signale wiedergeben, und zur Erzeugung des Ausgangssignals voneinander subtrahiert werden, also z.B. bei einer Verwendung von Photodioden als Detektoren deren Photoströme. Unter einer Variierung einer Linearkombination ist hierbei insbesondere umfasst, zusätzlich zur Differenzbildung der internen Messsignale, welche für die abgeglichene Homodyndetektion zur Erzeugung des Ausgangssignals vorgesehen ist, wenigstens eine weitere Linearkombination, bevorzugt eine Summe, der internen Messsignale zu bilden.

Bei einer abgeglichenen Homodyndetektion werden infolge der Subtraktion der internen Messsignale der Messvorrichtung idealerweise nur die Quantenfluktuationen des optischen Eingangssignals gemessen. Ein technisches Rauschen insbesondere des Lasers kann jedoch infolge der Subtraktion im Ausgangssignal nicht erkannt werden. Durch eine geeignete Linearkombination, insbesondere eine Summe, der internen Messsignale kann der Grad an technischem Rauschen des Lasers in den internen Messsignalen ermittelt werden, und dies für eine Abschätzung des Anteils an Quantenrauschen im Ausgangssignal herangezogen werden.

Vorteilhafterweise wird hierbei zum Abschätzen des Anteils an technischem Rauschen eine Summe der internen Messsignale der Messvorrichtung mit einem ermittelten Anteil des Testsignals im Ausgangssignal der Messvorrichtung verglichen. Über den ermittelten Anteil des Testsignals im Ausgangssignal, insbesondere nach einer entsprechenden Anpassung der Messvorrichtung zur Minimierung dieses Anteils beispielsweise durch das Teilungsverhältnis des zentralen Strahlteilers, kann ein Grenzwert für den Grad an technischem Rauschen bestimmt werden, welcher infolge der Abstimmung der Messvorrichtung gerade noch eliminiert werden kann. Über die Summe der internen Messsignale der Messvorrichtung kann der tatsächlich vorhandene Grad an technischem Rauschen ermittelt werden. Dieser ist bevorzugt geringer als der ermittelte Grenzwert. In Abhängigkeit vom Abstand zwischen dem tatsächlich vorhandenen technischen Rauschen und dem Grenzwert kann ein Algorithmus zur Zufallsextraktion, insbesondere dessen extrahierte Entropie pro Zahleneinheit, gesteuert werden.

Einer weiter vorteilhafte, auch eigenständig erfinderische Ausgestaltung ist gegeben in einem Verfahren zur Erzeugung von auf Quantenrauschen basierenden Zufallszahlen, wobei anhand einer wiederholten Messung eines quantenmechanischen Zufallsprozesses eine erste Zahlensequenz generiert wird, wobei anhand der ersten Zahlensequenz eine Zufallszahl erzeugt wird, wobei die Messung des quantenmechanischen Zufallsprozesses durch eine Messvorrichtung zur abgeglichenen Homodyndetektion eines optischen Eingangssignals mittels eines durch einen Laser erzeugten Laserstrahls als lokalem Oszillator durchgeführt wird. Hierbei ist vorgesehen, dass vom Laserstrahl ein Hilfsstrahl abgezweigt wird, und aus dem Hilfsstrahl durch Abschwächung das optische Eingangssignal erzeugt wird. Insbesondere kann dieses Verfahren auch die weiteren Merkmale des vorbeschriebenen Verfahrens aufweisen.

Unter einer Erzeugung eines optischen Eingangssignals aus dem Hilfsstrahl durch Abschwächung ist hierbei insbesondere zu verstehen, dass das optische Eingangssignal eine nichtverschwindende mittlere Photonenzahl und somit Intensität aufweist, und dadurch vom Vakuumzustand verschieden ist. Bevorzugt wird hierbei eine lineare Abschwächung verwendet, sodass das erzeugte optische Eingangssignal im Wesentlichen quantenrauschlimitiert ist.

Das genannte Vorgehen ist gerade dann vorteilhaft, wenn der für das optische Eingangssignal vorgesehene Eingang des zentralen Strahlteilers nicht mit beliebiger Sicherheit blockiert werden kann, um dort einen Vakuumzustand zu erzeugen, beispielsweise wenn besagter Eingang für den Strahlengang eines Mach-Zehnder-Interferometers zur Korrektur von Asymmetrien des zentralen Strahlteilers zeitweise geöffnet bleiben soll. Der Hilfsstrahl kann in vorliegendem Fall direkt in den Strahlengang des Mach-Zehnder-Interferometers implementiert werden, sodass nach einer abgeschlossenen Feinabstimmung des zentralen Strahlteilers die Phasenverzögerung durch eine entsprechende Abschwächung für die Erzeugung des optischen Eingangssignals ersetzt werden kann. Die Abweichungen in der Messstatistik von der eines Vakuumzustandes sind in diesem Fall infolge der kontrollierten Abschwächung bekannt, und können bei der Erzeugung der Zufallszahlen mittels des Algorithmus zur Zufallsextraktion berücksichtigt werden, beispielsweise in Form einer entsprechend angepassten extrahierten Entropie pro Zahleneinheit in Abhängigkeit dieser Abweichungen.

Als vorteilhaft erweist es sich hierbei, wenn das optische Eingangssignal auf eine mittlere Photonenzahl von weit unter ein Photon, bevorzugt 0.1 Photonen, besonders bevorzugt 0.01 Photonen pro Puls und/oder Messzeiteinheit abgeschwächt wird, und der Algorithmus zur Zufallsextraktion derart gesteuert wird, dass die die durch den Algorithmus extrahierte Entropie pro Zahleneinheit in Abhängigkeit einer Messstatistik des optischen Eingangssignals bei der abgeglichenen Homodyndetektion gewählt wird. Insbesondere kann hierbei die extrahierte Entropie pro Zahleneinheit in Abhängigkeit einer Varianz und/oder eines Mittelwertes des Ausgangssignals der abgeglichenen Homodyndetektion erfolgen, wobei für eine zunehmende Varianz und/oder en Zunehmenden Mittelwert eine geringere Entropie extrahiert wird.

Die zweitgenannte Aufgabe wird erfindungsgemäß gelöst durch einen Zufallszahlengenerator mit einem Laser zur Erzeugung eines Laserstrahls, einer Messvorrichtung zur abgeglichenen Homodyndetektion eines optischen Eingangssignals mittels des Lasers als lokalem Oszillator, welche einen ersten optischen Eingang zum Einkoppeln des lokalen Oszillators und einen zweiten optischen Eingang zum Einkoppeln des optischen Eingangssignals aufweist, einer Wandlereinheit zur Erzeugung einer ersten Zahlensequenz aus einem Ausgangssignal der Messvorrichtung, und Mitteln zur Erzeugung einer Zufallszahl anhand der ersten Zahlensequenz. Erfindungsgemäß weist der Zufallszahlengenerator hierbei Mittel zur Überprüfung der Entropie der ersten Zahlensequenz auf, wobei die Mittel zur Überprüfung der Entropie der ersten Zahlensequenz eine Antennenvorrichtung und/oder Mittel zum zeitzufälligen Bestimmen eines Anteils an Quantenrauschen im Ausgangssignal der Messvorrichtung umfassen. Die für das Verfahren zur Erzeugung von auf Quantenrauschen basierenden Zufallszahlen und für seine Weiterbildungen angegebenen Vorteile können hierbei sinngemäß auf den Zufallszahlengenerator und dessen Weiterbildungen übertragen werden.

Bevorzugt sind die Mittel zur Erzeugung einer Zufallszahl anhand der ersten Zahlensequenz dazu eingerichtet, die Zufallszahl mittels eines vorgegebenen Algorithmus zur Zufallsextraktion aus der ersten Zahlensequenz in Abhängigkeit vom Anteil an Quantenrauschen im Ausgangssignal derart zu erzeugen, dass eine Entropie pro Zahleneinheit der ersten Zahlensequenz, welche der Algorithmus zur Zufallsextraktion aus der ersten Zahlensequenz extrahiert, umso geringer ist, und somit eine aus der ersten Zahlensequenz extrahierte Zufallszahl umso kürzer ist, je geringer der Anteil an Quantenrauschen ist.

Als vorteilhaft erweist es sich, wenn die Mittel zum zeitzufälligen Bestimmen eines Anteils an Quantenrauschen im Ausgangssignal der Messvorrichtung Mittel zum Aufmodulieren eines vorgegebenen Testsignals auf den Laserstrahl, und/oder wenigstens Mittel zur Abschwächung einer Intensität des Laserstrahls und/oder des optischen Eingangssignals, und/oder Mittel zur Variation einer Linearkombination von internen Messsignalen der Messvorrichtung insbesondere für ein Abschätzen eines technischen Rauschens im Ausgangssignal der Messvorrichtung umfassen. Die Mittel zum Aufmodulieren eines vorgegebenen Testsignals auf den Laserstrahl umfassen dabei vorzugsweise einen elektro-optischen Modulator oder einen akusto-optischen Modulator oder eine Schaltung zur kontrollierten Modulation des Laserstroms, z.B. mittels eines entsprechenden Funktionsgenerators.

Bevorzugt weist dabei der Zufallszahlengenerator für den Fall, dass die Mittel zum zeitzufälligen Bestimmen eines Anteils an Quantenrauschen im Ausgangssignal der Messvorrichtung einen elektro-optischen Modulator zum Aufmodulieren eines vorgegebenen Testsignals auf den Laserstrahl umfassen, ein Mach-Zehnder-Interferometer mit mindestens einem Phasenverzögerungselement zur Korrektur einer Asymmetrie eines zentralen Strahlteilers der Messvorrichtung auf, wobei wenigstens das Mach-Zehnder-Interferometer besonders bevorzugt auf einem integrierten photonischen Schaltkreis ("photonic integrated circuit", PIC) implementiert ist. Insbesondere ist die optische Schaltung des Zufallszahlengenerators, welche auch den Laser und die Messvorrichtung zur abgeglichenen Homodyndetektion umfasst, vollständig auf einem PIC integriert. Das Phasenverzögerungselement kann dabei insbesondere einen Kristall aus Lithium-Niobat oder Indium-Phosphit umfassen.

In einer weiter vorteilhaften, für sich eigenständig erfinderischen Ausgestaltung umfasst der Zufallszahlengenerator einen Laser zur Erzeugung eines Laserstrahls, eine Messvorrichtung zur abgeglichenen Homodyndetektion eines optischen Eingangssignals mittels des Laserstrahls als lokalem Oszillator, welche einen ersten optischen Eingang zum Einkoppeln des lokalen Oszillators und einen zweiten optischen Eingang zum Einkoppeln des optischen Eingangssignals aufweist, eine Wandlereinheit zur Erzeugung einer ersten Zahlensequenz aus einem Ausgangssignal der Messvorrichtung, sowie Mittel zur Erzeugung einer Zufallszahl anhand der ersten Zahlensequenz. Hierbei sind weiter ein Auskopplungs-Strahlteiler zum Abzweigen eines Hilfsstrahls aus dem Laserstrahl und Mittel zur Abschwächung des Hilfsstrahls vorgesehen, wobei die Mittel zur Abschwächung des Hilfsstrahls derart eingerichtet sind, dass durch die Abschwächung das optische Eingangssignal erzeugt wird. Insbesondere kann der besagte Zufallszahlengenerator hierbei auch weitere, vorbeschriebene Merkmale aufweisen.

Die Erfindung nennt weiter die Verwendung von Mitteln zur Überprüfung einer Entropie einer ersten Zahlensequenz, welche anhand eines Ausgangssignals einer Messvorrichtung zur abgeglichenen Homodyndetektion bei einer Erzeugung von Zufallszahlen generiert wird, wobei die Mittel eine Antennenvorrichtung und/oder Mittel zum Bestimmen eines Anteils an Quantenrauschen im Ausgangssignal der Messvorrichtung zu zufällig gewählten Zeitpunkten umfassen, wobei anhand der ersten Zahlensequenz eine Zufallszahl erzeugt wird. Die für das Verfahren zur Erzeugung von auf Quantenrauschen basierenden Zufallszahlen und für seine Weiterbildungen genannten Vorteile können hierbei sinngemäß auf die Verwendung von Mitteln zur Überprüfung einer Entropie einer ersten Zahlensequenz, welche anhand eines Ausgangssignals einer Messvorrichtung zur abgeglichenen Homodyndetektion bei einer Erzeugung von Zufallszahlen generiert wird, übertragen werden.

Nachfolgend wird ein Ausführungsbeispiel der Erfindung anhand einer Zeichnung näher erläutert. Hierbei zeigt schematisch:
- Fig. 1: in einem Blockschaltbild einen Zufallszahlengenerator zur Erzeugung von Zufallszahlen aus dem Ausgangssignal einer Messvorrichtung zur abgeglichenen Homodyndetektion, welche einen Laserstrahl als lokalen Oszillator verwendet,
- Fig. 2: in einer Ausschnittdarstellung den Zufallszahlengenerator nach Fig. 1 mit einem Mach-Zehnder-Interferometer im Strahlengang des Laserstrahls, und
- Fig. 3: in einem Blockschaltbild eine Variante des Zufallszahlengenerator nach Fig. 1, in welcher das optische Eingangssignal aus dem Laserstrahl des lokalen Oszillators abgezweigt wird.

Einander entsprechende Teile und Größen sind in allen Figuren jeweils mit gleichen Bezugszeichen versehen.

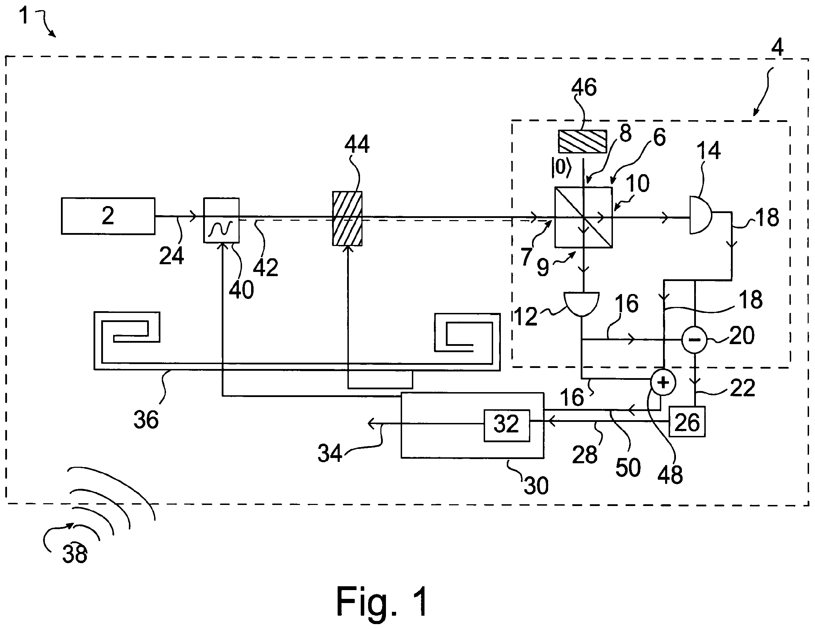

In Fig. 1 ist schematisch in einem Blockschaltbild ein Zufallszahlengenerator 1 dargestellt, welcher einen Laser 2 und eine Messvorrichtung 4 zur abgeglichenen Homodyndetektion umfasst. Die Messvorrichtung 4 umfasst einen zentralen Strahlteiler 6 mit einem ersten Eingang 7 und einem zweiten Eingang 8 sowie einem ersten Ausgang 9 und einem zweiten Ausgang 10. Der erste Ausgang 9 und der zweite Ausgang 10 sind jeweils mit einem ersten bzw. zweiten Detektor 12, 14 optisch verbunden, z.B. über entsprechende Strahlengänge oder -leiter. Die beiden Detektoren 12, 14 sind vorliegend jeweils als Photodioden ausgestaltet, die ein erstes bzw. zweites internes Messsignal 16, 18 in Form von Photoströmen erzeugen. Die beiden internen Messsignale 16, 18 werden an einer ersten Node 20 voneinander subtrahiert, und hieraus ein Ausgangssignal 22 der Messvorrichtung erzeugt. Mögliche analoge und/oder Signalverstärkungen und/oder Filter sowohl der internen Messsignale 16, 18 vor der Subtraktion als auch des erzeugten Differenzsignals sollen hierbei in der Node 20 inkorporiert sein.

Der Laser 2 erzeugt einen Laserstrahl 24, welcher zum ersten Eingang 7 des zentralen Strahlteilers 6 der Messvorrichtung propagiert. Der zweite Eingang 8 des zentralen Strahlteilers 6 ist blockiert, sodass die Messvorrichtung 4 mittels des Laserstrahls 24 als lokalem Oszillator eine abgeglichene Homodyndetektion des optischen Vakuumzustandes |0〉 durchführt. Das Ausgangssignal 24 wird in einer Wandlereinheit 26, welche insbesondere einen A/D-Wandler sowie Mittel zu einem entsprechenden "Binning" des Wertebereichs des Ausgangssignals 24 über eine Digitalisierung hinaus aufweisen kann, zu einer ersten Zahlensequenz 28 verarbeitet. Auf diese wird nun in einer Prozessoreinheit 30 ein Algorithmus 32 zur Zufallsextraktion angewandt, um so Zufallszahlen 34 zu erzeugen.

Um nun sicherzustellen, dass das Ausgangssignal 24 in größtmöglichem Maße Quantenfluktuationen des Vakuumzustands |0〉 wiedergibt, und hierbei insbesondere keinerlei externe Manipulationen erfolgt sind, weist der Zufallszahlengenerator 1 eine Antennenvorrichtung 36 auf, welche mit der Prozessoreinheit 30 verbunden ist. Die Antennenvorrichtung 36 bildet hierbei einzelne Leiterschleifen aus, welche in unmittelbarer Nähe zum Laser 2 und zur Messvorrichtung 4 verlaufen, wobei dies in Fig. 1 zur besseren Übersichtlichkeit nur schematisch angedeutet ist. Wird nun von außen ein elektromagnetisches Signal 38 eingestrahlt, um z.B. das sog. optische Pumpen im Laser 2 zu beeinflussen, kann die hierbei eingestrahlte Strahlungsleistung mittels der Antennenvorrichtung 36 detektiert werden. Die Prozessoreinheit 30 kann dann die eingestrahlte Leistung auswerten, und z.B. bei einem Überschreiten einer kritischen Wertes die Erzeugung der Zufallszahlen 34 aus der ersten Zahlensequenz 28 aussetzen.

Weiter weist der Zufallszahlengenerator 1 einen elektro-optischen Modulator 40 auf, welcher im Strahlengang des Laserstrahls 24 zum ersten Eingang 7 des zentralen Strahlteilers 6 angeordnet ist. Über den elektro-optischen Modulator, welcher von der Prozessoreinheit 30 angesteuert wird, kann dem Laserstrahl 24 zu zufällig gewählten Zeitpunkten ein Testsignal 42 aufmoduliert werden, beispielsweise in Form einer Sinusschwingung konstanter Frequenz und Amplitude. Im Idealfall sind der zentrale Strahlteiler 6 der Messvorrichtung 4 absolut symmetrisch sowie die beiden Detektoren 12 und 14 absolut identisch, sodass infolge der Subtraktion der internen Messsignale 16, 18 an der Node 20 der Anteil des Testsignals 42 im Ausgangssignal 22 verschwinden müsste. Jedoch ist dies in der Realität nicht zu erwarten. Eine Asymmetrie des zentralen Strahlteilers 6 kann nun beispielsweise in noch darzustellender Weise mittels eines Mach-Zehnder-Interferometers korrigiert werden, sodass der Anteil des Testsignals 42 im Ausgangssignal 22 möglichst minimiert wird. Hierdurch kann einerseits der Anteil an technischem Rauschen im Ausgangssignal 22 möglichst unterdrückt werden, und andererseits eine Grenze für den verbleibenden Anteil an technischem Rauschen infolge der Asymmetrie des zentralen Strahlteilers 6 angegeben werden, wodurch auf einen Anteil an Quantenrauschen im Ausgangssignal 22 geschlossen werden kann. Der Algorithmus 32 kann diesen Anteil als Steuergröße verwenden, um entsprechend bei geringerem Quantenrauschen im Ausgangssignal 22 bei der Erzeugung der Zufallszahlen 34 eine geringere Entropie pro Eingangs-Bit, also pro Bit der ersten Zahlensequenz 28, zu extrahieren. Die konkrete Wahl der Abhängigkeit und der pro Eingangs-Bit zu extrahierenden Entropie bzw. deren Variation kann hierbei in Abhängigkeit des erwünschten Sicherheitsniveaus gewählt werden.

Der Zufallszahlengenerator weist weiter zwei Elemente zum Abschwächen von Intensitäten auf, welche durch einen ersten linearen Abschwächer 44 in Strahlengang des Lasers 24 und einen zweiten linearen Abschwächer 46 in der Nähe des zweiten Eingangs 8 des zentralen Strahlteilers 6 gegeben sind, und jeweils durch die Prozessoreinheit 30 angesteuert werden. In einem zufällig gewählten Zeitintervall wird die Intensität des Laserstrahls 24 durch den ersten linearen Abschwächer 44 zunehmend abgeschwächt, und hierbei das Rauschen des Ausgangssignals 22 observiert. Im Idealfall liefert der Laser keine anderen als quantenmechanische Rauschbeiträge, welche linear in der Intensität skalieren. Abweichungen von diesem linearen Verhalten des Rauschens im Ausgangssignal 22 bei einem linearen Abschwächen der Intensität des Laserstrahls 24 durch den ersten linearen Abschwächer 44 kann darauf geschlossen werden, dass im Laserstrahl 24 noch andere Rauschanteile, z.B. durch ein thermisches Rauschen des Lasers 2 beim Inversionsprozess oder durch oder elektronisches Rauschen, welches sich über den Pumpvorgang im Laser 2 bemerkbar macht, vorhanden sind. Diese Anteile können abgeschätzt werden. Auch hierbei kann die Auswirkung auf den Anteil an Quantenrauschen im Ausgangssignal 22 ermittelt werden, welcher in bereits beschriebener Weise zur Steuerung einer mittels des Algorithmus 32 aus der ersten Zahlensequenz 28 extrahierten Entropie pro Bit bei der Erzeugung der Zufallszahlen 34 verwendet werden kann.

Ebenfalls in einem zufällig gewählten Zeitintervall wird durch den zweiten linearen Abschwächer 46, welcher unmittelbar vor dem zweiten Eingang 8 des zentralen Strahlteilers 6 angeordnet ist, eine Intensität abgeschwächt. Da zur Erzeugung der ersten Zahlensequenz die Quantenfluktuationen des am zweiten Eingang 8 anliegenden Vakuumzustandes |0〉 durch die Messvorrichtung 4 gemessen werden, und der zweite Eingang 8 entsprechend durch Blockieren o.ä. präpariert ist, keinerlei Intensität passieren zu lassen, dürfte die Veränderung der Transmission durch den zweiten linearen Abschwächer 46 keinerlei Auswirkungen auf das Ausgangssignal 22 haben.

Sollte sich jedoch das Ausgangssignal 22 bei einer Abschwächung der transmittierten Intensität durch den zweiten linearen Abschwächer 46 vor dem eigentlich blockierten zweiten Eingang 8 verändern, so ist dies ein Indiz dafür, dass Streulicht in den zweiten Eingang 8 eindringen kann. Durch die Abhängigkeit der Veränderungen des Ausgangssignals 22 vom Grad der Abschwächung durch den zweiten linearen Abschwächer 46 kann abgeschätzt werden, wie viel Streulicht in den vermeintlich blockierten zweiten Eingang 8 eindringt, bzw., in welchem Maß der Vakuumzustand |0〉 am zweiten Eingang von anderen Lichtzuständen überlagert ist, welche zu zusätzlichen Fluktuationen unbekannter Natur beitragen könnten. Auch die Abschätzung des Lichtanteils, welcher am zweiten Eingang 8 dem Vakuumzustand überlagert in den zentralen Strahlteiler 6 eindringt, kann für den Anteil an Quantenrauschen im Ausgangssignal 22 berücksichtigt werden, anhand dessen der Algorithmus 32 zur Erzeugung der Zufallszahlen 34 aus der ersten Zahlensequenz 28 gesteuert wird.

Um zusätzlich den Anteil des technischen Rauschens im Ausgangssignal 22 besser abschätzen zu können, anhand dessen der Anteil des Quantenrauschens bestimmt wird, werden die beiden internen Messsignale 16, 18 der beiden Detektoren 12, 14 der Messvorrichtung 4 zusätzlich zur Subtraktion an der Node 20, über welche das Ausgangssignal 22 gebildet wird, an einer Node 48 summiert, und das Summensignal 50 der Prozessoreinheit 50 zugeführt.

Es lässt sich zeigen, dass bei einer idealen Messvorrichtung 4 im theoretischen Grenzfall im Summensignal 50 sowohl quantenmechanische als auch klassische, also insbesondere technisch-elektronische Rauschanteile vorhanden sind. Durch einen Vergleich der klassischen Rauschbeiträge mit dem Ausgangssignal 22 kann sichergestellt werden, dass die in letzterem gemessenen Anteile an Quantenrauschen größer sind, als das technische Rauschen des Lasers 2 und der Messvorrichtung 4. Anhand des ermittelten Unterschiedes zwischen dem durch das Summensignal 50 ermittelte technische Rauschen und dem Anteil an Quantenrauschen im Ausgangssignal 22 kann die durch den Algorithmus 32 aus der ersten Zahlensequenz 28 zu extrahierende Entropie gesteuert werden.

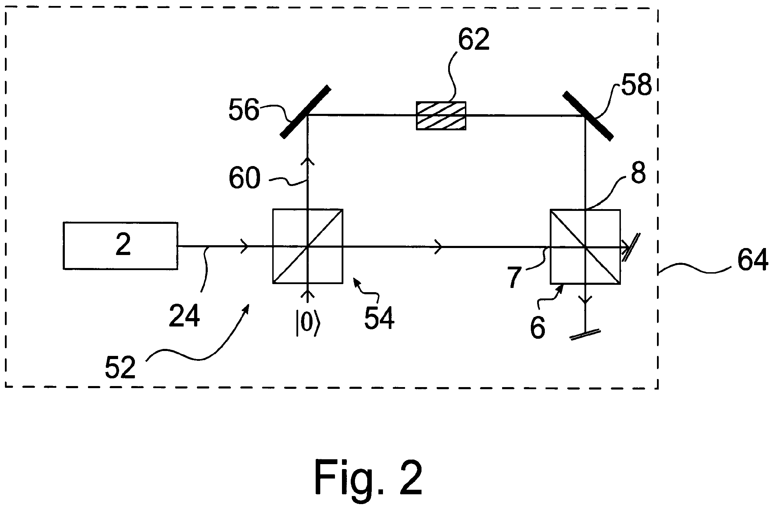

In Fig. 2 ist schematisch in einem Blockschaltbild ein Ausschnitt des Zufallszahlengenerators 1 nach Fig. 1 dargestellt, welcher zusätzlich noch ein Mach-Zehnder-Interferometer 52 aufweist. Das Mach-Zehnder-Interferometer 52 weist einen ersten Strahlteiler 54 auf, welcher im Strahlengang des Laserstrahls 24 angeordnet ist. Weiter weist das Mach-Zehnder-Interferometer zwei Umlenkspiegel 56, 58 zur Führung des vom Laserstrahl 24 durch den ersten Strahlteiler 54 abgezweigten Anteils 60 des Laserstrahls 24 auf. Dieser vom Laserstrahl 24 abgezweigte Anteil 60 wird über die Umlenkspiegel 56, 58 zunächst durch ein Phasenverzögerungselement 62 geführt, welches z.B. durch einen phasenmodulierenden Kristall mit LiNb oder InP gegeben sein kann. Anschließend wird der vom Laserstrahl 24 abgezweigte Anteil 60 an einem zweiten Strahlteiler wieder mit dem ursprünglichen Laserstrahl 24 überlagert, wobei der zweite Strahlteiler vorliegend gegeben ist durch den zentralen Strahlteiler 6 der Messvorrichtung zur abgeglichenen Homodyndetektion. Durch das Phasenverzögerungselement 62 kann die Intensität des am erste Ausgang 9 bzw. am zweiten Ausgang 10 ausgegebenen Anteils des Laserstrahls 24 variiert werden, wodurch eine Asymmetrie des zentralen Strahlteilers 6 weitgehend korrigiert werden kann. Da der zweite Eingang 8 des zentralen Strahlteilers 6 nun für den vom Laserstrahl 24 abgezweigten Anteil 60 verwendet wird, ist für einen dauerhaften Betrieb des Zufallszahlengenerators 1 mit einem Mach-Zehnder-Interferometer der ungenutzte Eingang 63 des ersten Strahlteilers 54 derart zu blockieren, dass dort de facto nur der Vakuumzustand |0〉 anliegt. Das Mach-Zehnder-Interferometer 52 kann jedoch auch nur während eines Kalibrationsvorgangs, welcher zu zufällig gewählten Zeitpunkten wiederholt werden kann, verwendet werden, sodass im Normalbetrieb des Zufallszahlengenerators der zweite Eingang 8 des zentralen Strahlteilers 6 blockiert wird, um den Vakuumzustand |0〉 dort anliegen zu lassen.

Im vorliegenden Ausführungsbeispiel ist der gesamte optische Signalweg, welcher den Laser 2, den Laserstrahl 24, das Mach-Zehnder-Interferometer 52 und die optischen Komponenten der Messvorrichtung 4 umfasst, in einem integrierten photonischen Schaltkreis 64 realisiert. Auch weitere in Fig. 1 dargestellte optische Komponenten, wie z.B. der elektro-optische Modulator 40 oder die beiden linearen Abschwächer 44, 46, können im integrierten photonischen Schaltkreis 64 realisiert sein.

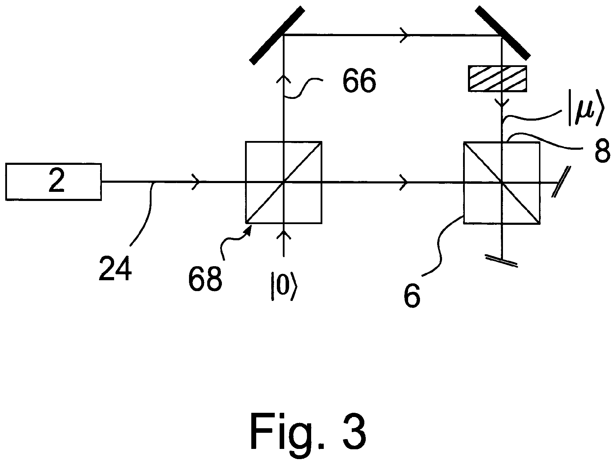

In Fig. 3 ist in einem Blockschaltbild schematisch eine Variante des Zufallszahlengenerators nach Fig. 1 dargestellt. Vom Laserstrahl 24 wird ein Hilfsstrahl 66 mittels eines Auskopplungs-Strahlteilers 68 ausgekoppelt. Der Hilfsstrahl 66 wird durch einen linearen Abschwächer 70 auf weinige Dezi-Photonen pro Puls abgeschwächt, und hierdurch ein optisches Eingangssignal |µ〉 erzeugt. Dieses geht dann in den zweiten Eingang 8 des zentralen Strahlteilers 6 der Messvorrichtung 4 ein, und das Ausgangssignal 22 wird durch eine abgeglichene Homodyndetektion des optischen Eingangssignals |µ〉 erzeugt.

Insbesondere lässt sich diese Variante mit den anhand von Fig. 1 dargestellte Maßnahmen zur Überprüfung der Entropie der ersten Zahlensequenz (28) kombinieren, und insbesondere lässt sich diese Variante auch in den integrierten photonischen Schaltkreis 64 nach Fig. 2 integrieren. Hierbei kann der Hilfsstrahl 66 als der abgezweigte Anteil 60 des Mach-Zehnder-Interferometers 52 gewählt werden (in diesem Fall entspricht der Auskopplungs-Strahlteiler 68 dem ersten Strahlteiler 54), wobei für die Erzeugung des optischen Eingangssignals |µ〉 das phasenverzögernde Element 62 durch den linearen Abschwächer 70 ersetzt werden kann.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Zufallszahlengenerator
- 2: Laser
- 4: Messvorrichtung
- 6: zentraler Strahlteiler
- 7: erster Eingang
- 8: zweiter Eingang
- 9: erster Ausgang
- 10: zweiter Ausgang
- 12: erster Detektor
- 14: zweiter Detektor
- 16: erstes internes Messsignal
- 18: zweites internes Messsignal
- 20: Node
- 22: Ausgangssignal
- 24: Laserstrahl
- 26: Wandlereinheit
- 28: erste Zahlensequenz
- 30: Prozessoreinheit
- 32: Algorithmus zur Zufallsextraktion
- 34: Zufallszahlen
- 36: Antennenvorrichtung
- 38: elektromagnetisches Signal
- 40: elektro-optischer Modulator
- 42: Testsignal
- 44: erster linearer Abschwächer
- 46: zweiter linearer Abschwächer
- 48: Node
- 50: Summensignal
- 52: Mach-Zehnder-Interferometer
- 54: erster Strahlteiler
- 56: Umlenkspiegel
- 58: Umlenkspiegel
- 60: abgezweigter Anteil des Laserstrahls
- 62: Phasenverzögerungselement
- 63: ungenutzte Eingang
- 64: integrierter photonischer Schaltkreis
- 66: Hilfsstrahl
- 68: Auskopplungs-Strahlteiler
- 70: linearer Abschwächer

- |0〉: Vakuumzustand
- |µ〉: (von Vakuumzustand verschiedener) optischer Eingangszustand

## Patentansprüche

1. Verfahren zur Erzeugung von auf Quantenrauschen basierenden Zufallszahlen (34),
- wobei anhand einer wiederholten Messung eines quantenmechanischen Zufallsprozesses eine erste Zahlensequenz (28) generiert wird,
- wobei anhand der ersten Zahlensequenz (28) eine Zufallszahl (34) erzeugt wird,
- wobei die Messung des quantenmechanischen Zufallsprozesses durch eine Messvorrichtung (4) zur abgeglichenen Homodyndetektion eines optischen Eingangssignals (|0〉, |µ〉) mittels eines durch einen Laser (2) erzeugten Laserstrahls (24) als lokalem Oszillator durchgeführt wird,
**dadurch gekennzeichnet, dass**
zur Überprüfung der Entropie der ersten Zahlensequenz (28)
- mittels einer wenigstens in einer unmittelbaren Umgebung des Lasers (2) und/oder der Messvorrichtung (4) angeordneten Antennenvorrichtung (36) eine auf den Laser (2) und/oder die Messvorrichtung (4) eingestrahlte Strahlungsleistung (38) ermittelt wird, und/oder
zu zufällig gewählten Zeitpunkten ein Anteil an Quantenrauschen in einem Ausgangssignal (22) der Messvorrichtung (4) bestimmt wird.

2. Verfahren nach Anspruch 1,
wobei die Zufallszahl (34) anhand der ersten Zahlensequenz (28) mittels eines Algorithmus (32) zur Zufallsextraktion erzeugt wird,
wobei anhand des Anteils an Quantenrauschen der Algorithmus (32) zur Zufallsextraktion derart gesteuert wird, dass die die durch den Algorithmus (32) zu extrahierende Entropie pro Zahleneinheit der ersten Zahlensequenz (28) umso geringer ist, je geringer der Anteil an Quantenrauschen ist.

3. Verfahren nach Anspruch 1 der Anspruch 2,
wobei zur Bestimmung des Anteils an Quantenrauschens dem Laserstrahl (24) ein vorgegebenes Testsignal (42) aufmoduliert wird, und
wobei ein Anteil des Testsignals (42) im Ausgangssignal (22) der Messvorrichtung (4) ermittelt wird.

4. Verfahren nach Anspruch 3,
wobei anhand des Anteils des Testsignals (42) im Ausgangssignal (22) der Messvorrichtung (4) ein Grad einer Asymmetrie eines zentralen Strahlteilers (6) der Messvorrichtung (4) bestimmt wird, und
wobei der Laserstrahl (24) und das optische Eingangssignal (|0〉, |µ〉) durch ein Mach-Zehnder-Interferometer (52) geführt werden, und dabei die Asymmetrie des zentralen Strahlteilers (6) der Messvorrichtung (4) über wenigstens eine Phasenverzögerung des Mach-Zehnder-Interferometers (52) verringert wird.

5. Verfahren nach einem der vorhergehenden Ansprüche,
wobei zur Bestimmung des Anteils an Quantenrauschen eine Intensität des Laserstrahls (24) und/oder des optischen Eingangssignals (|0〉, |µ〉) abgeschwächt wird, und
wobei eine Abhängigkeit eines Rauschens im Ausgangssignal (22) der Messvorrichtung (4) vom Grad einer aus der Abschwächung resultierenden Intensität überprüft wird.

6. Verfahren nach einem der vorhergehenden Ansprüche,
wobei zur Bestimmung des Anteils an Quantenrauschen eine Linearkombination von internen Messsignalen (16, 18) der Messvorrichtung (4) zur abgeglichenen Homodyndetektion variiert wird, und hieraus ein Anteil an technischem Rauschen im Ausgangssignal (22) abgeschätzt wird.

7. Verfahren nach Anspruch 6 in Verbindung mit einem der Ansprüche 3 oder 4,
wobei zum Abschätzen des Anteils an technischem Rauschen eine Summe der internen Messsignale (16, 18) der Messvorrichtung (4) mit einem ermittelten Anteil des Testsignals (42) im Ausgangssignal (22) der Messvorrichtung (4) verglichen wird.

8. Verfahren, insbesondere nach einem der vorhergehenden Ansprüche, zur Erzeugung von auf Quantenrauschen basierenden Zufallszahlen (34),
- wobei anhand einer wiederholten Messung eines quantenmechanischen Zufallsprozesses eine erste Zahlensequenz (28) generiert wird,
- wobei anhand der ersten Zahlensequenz (28) eine Zufallszahl (34) erzeugt wird,
- wobei die Messung des quantenmechanischen Zufallsprozesses durch eine Messvorrichtung (4) zur abgeglichenen Homodyndetektion eines optischen Eingangssignals (|µ〉) mittels eines durch einen Laser (2) erzeugten Laserstrahls (24) als lokalem Oszillator durchgeführt wird,
**dadurch gekennzeichnet,**
**dass** vom Laserstrahl (24) ein Hilfsstrahl (66) abgezweigt wird, und aus dem Hilfsstrahl (66) durch Abschwächung das optische Eingangssignal (|µ〉) erzeugt wird.

9. Verfahren nach Anspruch 8,
wobei das optische Eingangssignal (|µ〉) auf eine mittlere Photonenzahl von maximal ein Photon pro Puls abgeschwächt wird, und
wobei der Algorithmus (32) zur Zufallsextraktion derart gesteuert wird, dass die die durch den Algorithmus extrahierte Entropie pro Zahleneinheit in Abhängigkeit einer Messstatistik des optischen Eingangssignals (|µ〉) bei der abgeglichenen Homodyndetektion gewählt wird.

10. Zufallszahlengenerator (1), umfassend:
- einen Laser (2) zur Erzeugung eines Laserstrahls (24),
- eine Messvorrichtung (4) zur abgeglichenen Homodyndetektion eines optischen Eingangssignals (|0〉, |µ〉) mittels des Laserstrahls (24) als lokalem Oszillator, welche einen ersten optischen Eingang (7) zum Einkoppeln des lokalen Oszillators und einen zweiten optischen Eingang (8) zum Einkoppeln des optischen Eingangssignals (|0〉, |µ〉) aufweist,
- eine Wandlereinheit (26) zur Erzeugung einer ersten Zahlensequenz (28) aus einem Ausgangssignal (22) der Messvorrichtung (4),
- Mittel (30, 32) zur Erzeugung einer Zufallszahl (34) anhand der ersten Zahlensequenz (28),
**gekennzeichnet durch**
Mittel zur Überprüfung der Entropie der ersten Zahlensequenz (28), wobei die Mittel zur Überprüfung der Entropie der ersten Zahlensequenz eine Antennenvorrichtung (36) und/oder Mittel (40) zum zeitzufälligen Bestimmen eines Anteils an Quantenrauschen im Ausgangssignal (22) der Messvorrichtung (4) umfassen.

11. Zufallszahlengenerator (1) nach Anspruch 10,
wobei die Mittel (30, 32) zur Erzeugung einer Zufallszahl (34) anhand der ersten Zahlensequenz (28) dazu eingerichtet sind, die Zufallszahl (34) mittels eines vorgegebenen Algorithmus (32) zur Zufallsextraktion aus der ersten Zahlensequenz (28) in Abhängigkeit vom Anteil an Quantenrauschen im Ausgangssignal (22) derart zu erzeugen, dass eine durch den Algorithmus (32) zur Zufallsextraktion aus der ersten Zahlensequenz (28) zu extrahierende Entropie pro Zahleneinheit der ersten Zahlensequenz (28) umso geringer ist, je geringer der Anteil an Quantenrauschen ist.

12. Zufallszahlengenerator (1) nach Anspruch 10 oder Anspruch 11, wobei die Mittel (40) zum zeitzufälligen Bestimmen eines Anteils an Quantenrauschen im Ausgangssignal (22) der Messvorrichtung (4)
- Mittel (40) zum Aufmodulieren eines vorgegebenen Testsignals (42) auf den Laserstrahl, und/oder
- Mittel (44, 46) zur Abschwächung einer Intensität des Laserstrahls (24) und/oder des optischen Eingangssignals (|0〉, |µ〉), und/oder
- Mittel zur Variation einer Linearkombination von internen Messsignalen (16, 18) der Messvorrichtung (4)
umfassen.

13. Zufallszahlengenerator (1) nach Anspruch 12, umfassend
- einen elektro-optischen Modulator (40) zum Aufmodulieren eines vorgegebenen Testsignals (42) auf den Laserstrahl (42) und
- ein Mach-Zehnder-Interferometer (52) mit mindestens einem Phasenverzögerungselement (62) zur Korrektur einer Asymmetrie eines zentralen Strahlteilers (6) der Messvorrichtung (4).

14. Zufallszahlengenerator (1) nach Anspruch 13,
wobei wenigstens das Mach-Zehnder-Interferometer (52) auf einem integrierten photonischen Schaltkreis (64) implementiert ist.

15. Zufallszahlengenerator (1), insbesondere nach einem der Ansprüche 10 bis 14, umfassend:
- einen Laser (2) zur Erzeugung eines Laserstrahls (24),
- eine Messvorrichtung (4) zur abgeglichenen Homodyndetektion eines optischen Eingangssignals (|µ〉) mittels des Laserstrahls (24) als lokalem Oszillator, welche einen ersten optischen Eingang (7) zum Einkoppeln des lokalen Oszillators und einen zweiten optischen Eingang (8) zum Einkoppeln des optischen Eingangssignals (|µ〉) aufweist,
- eine Wandlereinheit (26) zur Erzeugung einer ersten Zahlensequenz (28) aus einem Ausgangssignal (22) der Messvorrichtung (4),
- Mittel (30, 32) zur Erzeugung einer Zufallszahl (34) anhand der ersten Zahlensequenz (28),
**gekennzeichnet durch**
einen Auskopplungs-Strahlteiler (68) zum Abzweigen eines Hilfsstrahls (66) aus dem Laserstrahl (24) und Mittel (70) zur Abschwächung des Hilfsstrahls (66),
wobei die Mittel zur Abschwächung des Hilfsstrahls (66) derart eingerichtet sind, dass durch die Abschwächung das optische Eingangssignal (|µ〉) erzeugt wird.

16. Verwendung von Mitteln zur Überprüfung einer Entropie einer ersten Zahlensequenz (28), welche anhand eines Ausgangssignals (22) einer Messvorrichtung (4) zur abgeglichenen Homodyndetektion eines optischen Eingangssignals (|0>, |µ>) mittels eines durch einen Laser (2) erzeugten Laserstrahls (24) als lokalem Oszillator bei einer Erzeugung von auf Quantenrauschen basierenden Zufallszahlen (34) generiert wird,
- wobei die Mittel eine Antennenvorrichtung (36) und/oder Mittel (40) zum Bestimmen eines Anteils an Quantenrauschen im Ausgangssignal (22) der Messvorrichtung (4) zu zufällig gewählten Zeitpunkten umfassen,
- wobei anhand der ersten Zahlensequenz (28) eine Zufallszahl (34) erzeugt wird.

17. Verwendung von Mitteln zur Überprüfung einer Entropie einer ersten Zahlensequenz (28) nach Anspruch 16, wobei die Zufallszahl (34) anhand der ersten Zahlensequenz (34) mittels eines Algorithmus (32) zur Zufallsextraktion erzeugt wird, und
wobei der Anteil an Quantenrauschen derart zur Steuerung des Algorithmus (32) zur Zufallsextraktion verwendet wird, dass eine durch den Algorithmus (32) aus der ersten Zahlensequenz (28) zu extrahierende Entropie pro Zahleneinheit der ersten Zahlensequenz (28) umso geringer ist, je geringer der Anteil an Quantenrauschen ist.

## Claims

1. A method for generating random numbers (34) which are based on quantum noise,
- wherein a first sequence of numbers (28) is generated on the basis of a repeated measurement of a quantum mechanical random process,
- wherein a random number (34) is generated on the basis of the first sequence of numbers (28),
- wherein the measurement of the quantum mechanical random process is performed by a measuring apparatus (4) for balanced homodyne detection of an optical input signal (|0, |µ) by means of a laser beam (24), generated by a laser (2), as a local oscillator,
**characterized in that**
for monitoring the entropy of the first sequence of numbers (28)
- a radiation power (38) radiated onto the laser (2) and/or the measuring apparatus (4) is determined by means of an antenna device (36) arranged at least in an immediate vicinity of the laser (2) and/or the measuring device (4), and/or
a share of quantum noise in an output signal (22) of the measuring apparatus (4) is determined at randomly selected times.

2. The method according to claim 1,
wherein the random number (34) is generated from the first sequence of numbers (28) by means of a randomness extraction algorithm (32), wherein the algorithm (32) for randomness extraction is controlled on the basis of the share of quantum noise in such a way that the entropy of the first number sequence (28) per number unit, said entropy to be extracted by the algorithm (32), is the smaller, the smaller the share of quantum noise.

3. The method according to claim 1 or claim 2,
Wherein, in order to determine the share of quantum noise, a predetermined test signal (42) is modulated onto the laser beam (24), and
wherein a share of the test signal (42) is determined in the output signal (22) of the measuring apparatus (4).

4. The method according to claim 3,
wherein a degree of asymmetry of a central beam splitter (6) of the measuring device (4) is determined on the basis of the share of the test signal (42) in the output signal (22) of the measuring device (4), and
wherein the laser beam (24) and the optical input signal (|0〉, |µ〉) are guided through a Mach-Zehnder interferometer (52), and thereby the asymmetry of the central beam splitter (6) of the measuring apparatus (4) is reduced via at least one phase delay of the Mach-Zehnder interferometer (52).

5. The method according to one of the preceding claims,
wherein an intensity of the laser beam (24) and/or of the optical input signal (|0〉, |µ〉) in order to determine the share of quantum noise, and
wherein a dependence of noise in the output signal (22) of the measurement apparatus (4) on a degree of an intensity resulting from said attenuation is monitored.

6. The method according to one of the preceding claims,
wherein, in order to determine the share of quantum noise, a linear combination of internal measurement signals (16, 18) of the measuring apparatus (4) for balanced homodyne detection is varied, and a share of technical noise in the output signal (22) is estimated therefrom.

7. The method according to claim 6 in combination with one of claims 3 or 4, wherein, in order to estimate the share of technical noise, a sum of the internal measurement signals (16, 18) of the measuring apparatus (4) is compared with a determined share of the test signal (42) in the output signal (22) of the measuring apparatus (4).

8. A method, in particular according to one of the preceding claims, for generating random numbers (34) which are based on quantum noise,
- wherein a first sequence of numbers (28) is generated on the basis of a repeated measurement of a quantum mechanical random process,
- wherein a random number (34) is generated on the basis of the first sequence of numbers (28),
- wherein the measurement of the quantum mechanical random process is performed by a measuring apparatus (4) for balanced homodyne detection of an optical input signal (|0, |µ) by means of a laser beam (24), generated by a laser (2), as a local oscillator,
**characterized in that**
an auxiliary beam (66) is split off the laser beam (24), and the optical input signal (|µ〉) is generated from the auxiliary beam (66) by attenuation.

9. The method according to claim 8,
wherein the optical input signal (|µ〉) is attenuated to a mean photon number of at most one photon per pulse, and
wherein the algorithm (32) for randomness extraction is controlled in a way such that the entropy per number unit, extracted by the algorithm, is selected in dependence on a measurement statistics of the optical input signal (|µ〉) at the balanced homodyne detection.

10. A random number generator (1), comprising:
- a laser (2) for generating a laser beam (24),
- a measuring apparatus (4) for balanced homodyne detection of an optical input signal (|0〉, |µ〉) by means of the laser beam (24) as a local oscillator, comprising a first optical input (7) for coupling in the local oscillator and a second optical input (8) for coupling in the optical input signal (|0〉, |µ〉),
- a converter unit (26) for generating a first sequence of numbers (28) from an output signal (22) of the measuring apparatus (4),
- means (30, 32) for generating a random number (34) on the basis of the first sequence of numbers (28),
**characterized by**
means for monitoring the entropy of the first sequence of numbers (28),
wherein said means for monitoring entropy of the first sequence of numbers comprise an antenna apparatus (36) and/or means (40) for determining, at random times, a share of quantum noise in the output signal (22) of the measurement apparatus (4).

11. The random number generator (1) according to claim 10,
wherein said means (30, 32) for generating a random number (34) by means of the first sequence of numbers (28) are configured to generate the random number (34) on the basis of a given algorithm (32) for randomness extraction from the first sequence of numbers (28) in dependence on a share of quantum noise in the output signal (22) in such a way that an entropy of the first sequence of numbers (28) per unit number, to be extracted by the algorithm (32) for randomness extraction from the first sequence of numbers (28), is the smaller, the smaller the share of quantum noise.

12. The random number generator (1) according to claim 10 or claim 11, wherein said means (40) for determining, at random times, a share of quantum noise in the output signal (22) of the measuring apparatus (4) comprise
- means (40) for modulating a pre-determined test signal (42) onto the laser beam, and/or
- means (44, 46) for attenuating an intensity of the laser beam (24) and/or of the optical input signal (|0〉, |µ〉), and/or
- means for varying a linear combination of internal measurement signals (16, 18) of the measuring apparatus (4).

13. The random number generator (1) according to claim 12, comprising
- an electro-optical modulator (40) for modulating a pre-determined test signal (42) onto the laser beam (42) and
- a Mach-Zehnder interferometer (52) with at least one phase delay element (62) for correcting an asymmetry of a central beam splitter (6) of the measuring apparatus (4).

14. The random number generator (1) according to claim 13,
wherein at least the Mach-Zehnder interferometer (52) is implemented on an integrated photonic circuit (64).

15. A random number generator (1), in particular according to any of claims 10 to14, comprising:
- a laser (2) for generating a laser beam (24),
- a measuring apparatus (4) for balanced homodyne detection of an optical input signal (|0〉, |µ〉) by means of the laser beam (24) as a local oscillator, comprising a first optical input (7) for coupling in the local oscillator and a second optical input (8) for coupling in the optical input signal (|0〉, |µ〉),
- a converter unit (26) for generating a first sequence of numbers (28) from an output signal (22) of the measuring apparatus (4),
- means (30, 32) for generating a random number (34) on the basis of the first sequence of numbers (28),
**characterized by**
a coupling-out beam splitter (68) for splitting off an auxiliary beam (66) from the laser beam (24), and means (70) for attenuating the auxiliary beam (66), wherein said means for attenuating the auxiliary beam (66) are configured in a way such that the optical input signal (|µ〉) is generated from the attenuation.

16. Use of means for monitoring an entropy of a first sequence of numbers (28), generated on the basis of an output signal (22) of a measuring device (4) for balanced homodyne detection of an optical input signal (|0>, |µ>) by means of a laser beam (24) generated by a laser (2) as a local oscillator during a generation of random numbers (34) which are based on quantum noise,
- wherein said means for monitoring entropy of the first sequence of numbers comprise an antenna apparatus (36) and/or means (40) for determining, at random times, a share of quantum noise in the output signal (22) of the measurement apparatus (4),
- wherein a random number (34) is generated on the basis of the first number sequence (28).

17. Use of means for monitoring an entropy of a first sequence of numbers (28) according to claim 16, wherein the random number (34) is generated on the basis of the first sequence of numbers (34) by means of an algorithm (32) for randomness extraction, and
wherein the share of quantum noise is used to control the algorithm (32) for randomness extraction in a way such that an entropy of the first sequence of numbers (28) per unit number, to be extracted by the algorithm (32) for randomness extraction from the first sequence of numbers (28), is the smaller, the smaller the share of quantum noise.

## Revendications

1. Procédé de génération de nombres aléatoires (34) basées sur le bruit quantique,
- dans lequel une première séquence de nombres (28) est générée sur la base d'une mesure répétée d'un processus aléatoire de mécanique quantique,
- dans lequel un nombre aléatoire (34) est généré sur la base de la première séquence de nombres (28),
- dans lequel la mesure du processus aléatoire quantique est effectuée par un dispositif de mesure (4) pour la détection homodyne ajustée d'un signal d'entrée optique (|0〉 , |µ〉) au moyen d'un faisceau laser (24) généré par un laser (2) comme oscillateur local,
**caractérisé en ce que**
pour vérifier l'entropie de la première séquence de nombres (28)
- une puissance de rayonnement (38) irradiée sur le laser (2) et/ou le dispositif de mesure (4) est déterminée au moyen d'un dispositif d'antenne (36) disposé au moins dans un environnement immédiat du laser (2) et/ou du dispositif de mesure (4), et/ou
à des instants choisis de manière aléatoire, une proportion de bruit quantique est déterminée dans un signal de sortie (22) du dispositif de mesure (4).

2. Procédé selon la revendication 1,
dans lequel le nombre aléatoire (34) est généré sur la base de la première séquence de nombres (28) au moyen d'un algorithme (32) d'extraction aléatoire,
dans lequel l'algorithme (32) d'extraction aléatoire est contrôlé sur la base de la proportion de bruit quantique de telle sorte que l'entropie à extraire par l'algorithme (32) par unité de nombre de la première séquence de nombres (28) est d'autant plus faible que la proportion de bruit quantique est faible.

3. Procédé selon la revendication 1 de la revendication 2,
dans lequel un signal de test (42) prédéterminé est modulé sur le faisceau laser (24) pour déterminer la proportion de bruit quantique, et
une proportion du signal de test (42) est déterminée dans le signal de sortie (22) du dispositif de mesure (4).

4. Procédé selon la revendication 3,
dans lequel un degré d'asymétrie d'un diviseur de faisceau central (6) du dispositif de mesure (4) est déterminé sur la base de la proportion du signal de test (42) dans le signal de sortie (22) du dispositif de mesure (4), et dans lequel le faisceau laser (24) et le signal d'entrée optique (|0〉 , |µ〉) sont guidés à travers un interféromètre de Mach-Zehnder (52), et l'asymétrie du diviseur de faisceau central (6) du dispositif de mesure (4) est alors réduite par l'intermédiaire d'au moins un retard de phase de l'interféromètre de Mach-Zehnder (52).

5. Procédé selon l'une quelconque des revendications précédentes,
dans lequel une intensité du faisceau laser (24) et/ou du signal d'entrée optique (|0〉 , |µ〉) est atténuée pour déterminer la proportion de bruit quantique, et
une dépendance d'un bruit dans le signal de sortie (22) du dispositif de mesure (4) est contrôlée par rapport au degré d'une intensité résultant de l'atténuation.

6. Procédé selon l'une quelconque des revendications précédentes,
dans lequel, pour déterminer la proportion de bruit quantique, on fait varier une combinaison linéaire de signaux de mesure internes (16, 18) du dispositif de mesure (4) pour la détection homodyne ajustée, et on estime à partir de là une part de bruit technique dans le signal de sortie (22).

7. Procédé selon la revendication 6 en combinaison avec l'une des revendications 3 ou 4,
dans lequel une somme des signaux de mesure internes (16, 18) du dispositif de mesure (4) est comparée à une part déterminée du signal de test (42) dans le signal de sortie (22) du dispositif de mesure (4) pour estimer la proportion de bruit technique.

8. Procédé, notamment selon l'une des revendications précédentes, de génération de nombres aléatoires (34) basés sur un bruit quantique,
- dans lequel une première séquence de nombres (28) est générée sur la base d'une mesure répétée d'un processus aléatoire de mécanique quantique,
- dans lequel un nombre aléatoire (34) est généré sur la base de la première séquence de nombres (28),
- dans lequel la mesure du processus aléatoire quantique est effectuée par un dispositif de mesure (4) pour la détection homodyne ajustée d'un signal d'entrée optique (|µ〉) au moyen d'un faisceau laser (24) généré par un laser (2) comme oscillateur local,
**caractérisé en ce**
**qu'**un faisceau auxiliaire (66) est dérivé du faisceau laser (24), dans lequel et le signal d'entrée optique (|µ〉) est généré à partir du faisceau auxiliaire (66) par atténuation.

9. Procédé selon la revendication 8,
dans lequel le signal optique d'entrée (|µ〉) est atténué à un nombre moyen de photons d'au maximum un photon par impulsion, et
dans lequel l'algorithme (32) d'extraction aléatoire est contrôlé de telle sorte que l'entropie par unité numérique extraite par l'algorithme est choisie en fonction d'une statistique de mesure du signal optique d'entrée (|µ〉) lors de la détection homodyne ajustée.

10. Générateur de nombres aléatoires (1), comprenant
- un laser (2) pour générer un faisceau laser (24),
- un dispositif de mesure (4) pour la détection homodyne équilibrée d'un signal d'entrée optique (|0〉 , |µ〉) au moyen du faisceau laser (24) comme oscillateur local, qui présente une première entrée optique (7) pour le couplage de l'oscillateur local et une deuxième entrée optique (8) pour le couplage du signal d'entrée optique (|0〉 , |µ〉),
- une unité de conversion (26) pour générer une première séquence de nombres (28) à partir d'un signal de sortie (22) du dispositif de mesure (4),
- des moyens (30, 32) pour générer un nombre aléatoire (34) à partir de la première séquence de nombres (28),
**caractérisé par**
des moyens de vérifier l'entropie de la première séquence de nombres (28), dans lequel les moyens de vérification de l'entropie de la première séquence de nombres comprenant un dispositif d'antenne (36) et/ou des moyens (40) pour déterminer de manière aléatoire dans le temps une proportion de bruit quantique dans le signal de sortie (22) du dispositif de mesure .

11. Générateur de nombres aléatoires (1) selon la revendication 10,
dans lequel les moyens (30, 32) pour générer un nombre aléatoire (34) sur la base de la première séquence de nombres (28) sont conçus pour générer le nombre aléatoire (34) au moyen d'un algorithme (32) prédéterminé pour l'extraction aléatoire à partir de la première séquence de nombres (28) en fonction de la proportion de bruit quantique dans le signal de sortie (22) de telle sorte, qu'une entropie à extraire par l'algorithme (32) d'extraction aléatoire de la première séquence de nombres (28) par unité de nombre de la première séquence de nombres (28) est d'autant plus faible que la proportion de bruit quantique est faible.

12. Générateur de nombres aléatoires (1) selon la revendication 10 ou la revendication 11,
dans lequel les moyens (40) pour déterminer de manière aléatoire dans le temps une proportion de bruit quantique dans le signal de sortie (22) du dispositif de mesure (4) comprennent
- des moyens (40) pour moduler un signal de test (42) prédéterminé sur le faisceau laser, et/ou
- des moyens (44, 46) pour atténuer une intensité du faisceau laser (24) et/ou du signal optique d'entrée (|0〉 , |µ〉), et/ou
- des moyens pour faire varier une combinaison linéaire de signaux de mesure internes (16, 18) du dispositif de mesure (4).

13. Générateur de nombres aléatoires (1) selon la revendication 12, comprenant
- un modulateur électro-optique (40) pour moduler un signal de test (42) prédéterminé sur le faisceau laser (42) et
- un interféromètre de Mach-Zehnder (52) avec au moins un élément de retard de phase (62) pour corriger une asymétrie d'un diviseur de faisceau central (6) du dispositif de mesure (4).

14. Générateur de nombres aléatoires (1) selon la revendication 13,
dans lequel au moins l'interféromètre de Mach-Zehnder (52) est implémenté sur un circuit intégré photonique (64).

15. Générateur de nombres aléatoires (1), notamment selon l'une des revendications 10 à 14, comprenant :
- un laser (2) pour générer un faisceau laser (24),
- un dispositif de mesure (4) pour la détection homodyne équilibrée d'un signal d'entrée optique (|µ〉) au moyen du faisceau laser (24) comme oscillateur local, qui présente une première entrée optique (7) pour le couplage de l'oscillateur local et une deuxième entrée optique (8) pour le couplage du signal d'entrée optique (|µ〉),
- une unité de conversion (26) pour générer une première séquence de nombres (28) à partir d'un signal de sortie (22) du dispositif de mesure (4),
- des moyens (30, 32) pour générer un nombre aléatoire (34) à partir de la première séquence de nombres (28),
**caractérisé par**
un séparateur de faisceau de découplage (68) pour dériver un faisceau auxiliaire (66) du faisceau laser (24) et des moyens (70) pour atténuer le faisceau auxiliaire (66),
dans lequel les moyens d'atténuation du faisceau auxiliaire (66) sont agencés de telle sorte que l'atténuation permette de générer le signal d'entrée optique (|µ〉).

16. Utilisation de moyens pour vérifier une entropie d'une première séquence de nombres (28), qui est générée sur la base d'un signal de sortie (22) d'un dispositif de mesure (4) pour la détection homodyne ajustée d'un signal d'entrée optique (|0>, |µ>) au moyen d'un faisceau laser (24) généré par un laser (2) comme oscillateur local lors d'une génération de nombres aléatoires (34) basés sur un bruit quantique,
- dans lequel lesdits moyens comprennent un dispositif d'antenne (36) et/ou des moyens (40) pour déterminer une proportion de bruit quantique dans le signal de sortie (22) du dispositif de mesure (4) à des instants choisis de manière aléatoire,
- dans lequel un nombre aléatoire (34) est généré sur la base de la première séquence de nombres (28).

17. Utilisation de moyens pour vérifier une entropie d'une première séquence de nombres (28) selon la revendication 16, dans lequel le nombre aléatoire (34) est généré à partir de la première séquence de nombres (34) au moyen d'un algorithme (32) d'extraction aléatoire, et
dans lequel la proportion de bruit quantique est utilisée pour contrôler l'algorithme (32) d'extraction aléatoire de telle sorte qu'une entropie à extraire par l'algorithme (32) de la première séquence de nombres (28) par unité de nombre de la première séquence de nombres (28) est d'autant plus faible que la proportion de bruit quantique est faible.
